(19) **Europäisches Patentamt**
**European Patent Office**
**Office européen des brevets**

(11) **EP 4 665 018 A1**

(12) **EUROPEAN PATENT APPLICATION**
published in accordance with Art. 153(4) EPC

(43) Date of publication:
**17.12.2025 Bulletin 2025/51**

(21) Application number: **24807519.4**

(22) Date of filing: **13.05.2024**

(51) International Patent Classification (IPC):
*H04W 56/00* (2009.01)      *H04W 72/0446* (2023.01)
*H04L 5/00* (2006.01)       *H04W 72/1268* (2023.01)
*H04L 1/08* (2006.01)       *H04W 84/06* (2009.01)
*H04W 72/231* (2023.01)      *H04W 84/04* (2009.01)

(52) Cooperative Patent Classification (CPC):
**H04L 1/08; H04L 5/00; H04W 8/24; H04W 56/00;**
**H04W 72/0446; H04W 72/1268; H04W 72/21;**
**H04W 72/231; H04W 84/04; H04W 84/06**

(86) International application number:
**PCT/KR2024/006503**

(87) International publication number:
**WO 2024/237648 (21.11.2024 Gazette 2024/47)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **12.05.2023 KR 20230061945**
**09.08.2023 KR 20230104436**

(71) Applicants:
• **Hyundai Motor Company**
**Seoul 06797 (KR)**
• **Kia Corporation**
**Seoul 06797 (KR)**

(72) Inventors:
• **SUH, Young Kil**
**Hwaseong-si, Gyeonggi-do 18280 (KR)**
• **KIM, Dong Kyu**
**Hwaseong-si, Gyeonggi-do 18280 (KR)**
• **MOON, Gun Hee**
**Hwaseong-si, Gyeonggi-do 18280 (KR)**
• **HONG, Ui Hyun**
**Hwaseong-si, Gyeonggi-do 18280 (KR)**
• **LEE, Jeong Su**
**Hwaseong-si, Gyeonggi-do 18280 (KR)**
• **HAHN, Gene Back**
**Hwaseong-si, Gyeonggi-do 18280 (KR)**

(74) Representative: **Isarpatent**
**Patent- und Rechtsanwälte**
**Barth Hassa Peckmann & Partner mbB**
**Friedrichstraße 31**
**80801 München (DE)**

(54) **METHOD AND DEVICE FOR TIMING ADJUSTMENT IN NON-TERRESTRIAL NETWORK**

(57)    Disclosed are a method and device for timing adjustment in a non-terrestrial network. The method performed by a user equipment (UE) may comprise the steps of: receiving, from a base station, a signal including timing advance (TA) maintainable time information related to the duration for which demodulation reference signal (DMRS) bundling is maintained; using the TA maintainable time information to determine the point in time at which a TA adjustment procedure is performed; performing the TA adjustment procedure at the point in time at which the TA adjustment procedure is performed; and transmitting, to the base station, information about the adjusted TA.

[FIG. 11]

## Description

[Technical Field]

The present disclosure relates to a timing adjustment technique for a non-terrestrial network, and more particularly, to a timing adjustment technique for a terminal in order to perform reference signal bundling.

[Background Art]

Various methods for improving coverage in a non-terrestrial network (NTN) of new radio (NR) may be considered. The NTN may be applied to enhance the coverage of NR. In an NTN, significant propagation delays and satellite movement may occur. Therefore, the NTN may take such propagation delays or satellite movement into account to improve NR coverage.

A base station may improve the reliability of uplink data transmission from a terminal through repeated transmissions. Additionally, a terminal may enhance channel estimation performance for a reference signal using a bundling scheme. This bundling scheme and repeated transmission can improve the terminal's transmission efficiency. When the terminal repeatedly transmits a single transport block (TB), it may do so over multiple uplink slots. Reference signal bundling may be performed in one or more bundles per TB. Each bundle may be defined as a time domain window (TDW). The boundary for each TDW may be determined based on at least one of: a nominal time domain window, a time-domain allocation structure of the uplink channel, or an actual time domain window. The nominal TDW refers to a default value configured by the base station, while the actual TDW refers to a window in which power consistency and/or phase continuity is maintained under various event conditions.

A procedure for improving NR coverage may be designed considering a terrestrial network (TN) environment. However, in an NTN environment, unlike in TN, a sudden increase or decrease in round-trip time (RTT) between a terminal and a base station may occur. Since existing coverage improvement procedures do not account for such rapid RTT variation, timing advance (TA) adjustment procedures may not be performed properly in NTN. In an NTN, RTT may vary significantly across multiple slots depending on satellite altitude and elevation angle. When DMRS bundling is performed in NTN, a moment requiring TA adjustment may arise within the duration of a single slot. However, there remains a challenge in that the procedure for performing TA adjustment within a DMRS bundling duration has not been clearly specified.

[Disclosure]

[Technical Problem]

The present disclosure is directed to providing a method and an apparatus for timing adjustment in a non-terrestrial network.

[Technical Solution]

A method of a user equipment (UE), according to a first exemplary embodiment of the present disclosure for achieving the above-described objective, may comprise: receiving, from a base station, a signal including timing advance (TA) maintainable time information related to a time during which demodulation reference signal (DMRS) bundling is maintained; determining a time to perform a TA adjustment procedure based on the TA maintainable time information; performing the TA adjustment procedure at the determined time; and transmitting information on an adjusted TA to the base station.

The method may further comprise: acquiring an indicator for the TA maintainable time information included in the signal and contents of a mapping table for the TA maintainable time information; and acquiring a TA maintainable time based on the indicator and the mapping table.

The determining of the time to perform the TA adjustment procedure may comprise: determining, as the time to perform the TA adjustment procedure, a time after a TA maintainable time elapses from a time of a repeated transmission of a physical uplink shared channel (PUSCH).

The determining of the time to perform the TA adjustment procedure may comprise: determining, as the time to perform the TA adjustment procedure, a time after a TA maintainable time elapses from a last execution time of the TA adjustment procedure, during repeated PUSCH transmission.

The determining of the time to perform the TA adjustment procedure may comprise: in response to an actual time domain window being configured, determining, as the time to perform the TA adjustment procedure, an expiration time of a TA maintainable time including the actual TDW.

The determining of the time to perform the TA adjustment procedure may comprise: determining, as the time to perform the TA adjustment procedure, a time after a TA maintainable time elapses from a time of occurrence of an event in which signal consistency is not maintained.

The determining of the time to perform the TA adjustment procedure may comprise: configuring a temporary time domain window at a semi-static event; calculating a number of actual time domain windows by dividing the temporary time domain window based on the TA maintainable time information; determining a length of the actual time domain window by dividing a length of the temporary time domain window by the number of the actual time domain windows; and determining an expiration time of the actual time domain window as the time to perform the TA adjustment procedure.

The performing of the TA adjustment procedure at the determined time may comprise: receiving information on a TA variation through radio resource control (RRC) signaling; determining a sign and a magnitude of the TA variation based on the received information; and performing the TA adjustment procedure using the determined sign and magnitude.

A method of a base station, according to a second exemplary embodiment of the present disclosure for achieving the above-described objective, may comprise: transmitting, to a user equipment (UE), a signal including timing advance (TA) maintainable time information related to a time during which demodulation reference signal (DMRS) bundling is maintained; and receiving, from the UE, information on an adjusted TA based on the TA maintainable time information.

The method may further comprise: determining the TA maintainable time information based on at least one of location information of the UE or ephemeris information of a satellite.

The transmitting of the signal including the TA maintainable time information to the UE may comprise: determining an indicator for the TA maintainable time information based on at least one of location information of the UE or ephemeris information of a satellite; and transmitting, to the UE, the signal including an indicator corresponding to a mapping table for the TA maintainable time information.

The method may further comprise: receiving, from the UE, UE capability information including at least one of information on a temperature compensated crystal oscillator (TCXO) or a power amplifier (PA); and determining the TA maintainable time information in consideration of the UE capability information.

A user equipment (UE), according to a third exemplary embodiment of the present disclosure for achieving the above-described objective, may comprise at least one processor, wherein the at least one processor may cause the UE to perform: receiving, from a base station, a signal including timing advance (TA) maintainable time information related to a time during which demodulation reference signal (DMRS) bundling is maintained; determining a time to perform a TA adjustment procedure based on the TA maintainable time information; performing the TA adjustment procedure at the determined time; and transmitting information on an adjusted TA to the base station.

The at least one processor may further cause the UE to perform: acquiring an indicator for the TA maintainable time information included in the signal and contents of a mapping table for the TA maintainable time information; and acquiring a TA maintainable time based on the indicator and the mapping table.

In the determining of the time to perform the TA adjustment procedure, the at least one processor may cause the UE to perform: determining, as the time to perform the TA adjustment procedure, a time after a TA maintainable time elapses from a time of a repeated transmission of a physical uplink shared channel (PUSCH).

In the determining of the time to perform the TA adjustment procedure, the at least one processor may cause the UE to perform: determining, as the time to perform the TA adjustment procedure, a time after a TA maintainable time elapses from a last execution time of the TA adjustment procedure, during repeated PUSCH transmission.

In the determining of the time to perform the TA adjustment procedure, the at least one processor may cause the UE to perform: in response to an actual time domain window being configured, determining, as the time to perform the TA adjustment procedure, an expiration time of a TA maintainable time including the actual TDW.

In the determining of the time to perform the TA adjustment procedure, the at least one processor may cause the UE to perform: determining, as the time to perform the TA adjustment procedure, a time after a TA maintainable time elapses from a time of occurrence of an event in which signal consistency is not maintained.

In the determining of the time to perform the TA adjustment procedure, the at least one processor may cause the UE to perform: configuring a temporary time domain window at a semi-static event; calculating a number of actual time domain windows by dividing the temporary time domain window based on the TA maintainable time information; determining a length of the actual time domain window by dividing a length of the temporary time domain window by the number of the actual time domain windows; and determining an expiration time of the actual time domain window as the time to perform the TA adjustment procedure.

In the performing of the TA adjustment procedure at the determined time, the at least one processor may cause the UE to perform: receiving information on a TA variation through radio resource control (RRC) signaling; determining a sign and a magnitude of the TA variation based on the received information; and performing the TA adjustment procedure using the determined sign and magnitude.

[Advantageous Effects]

According to the present disclosure, assuming that a TA adjustment procedure can be performed when an event occurs, the expected length of an actual time domain window may increase. Since the overall expected performance is determined by the case with the lowest channel gain (i.e. the worst-case scenario), it may be necessary to extend the actual time domain window. The present disclosure can effectively improve joint channel estimation performance by reducing the frequency of short-length actual time domain windows.

[Description of Drawings]

FIG. 1A is a conceptual diagram illustrating a first exemplary embodiment of a non-terrestrial network.
FIG. 1B is a conceptual diagram illustrating a second exemplary embodiment of a non-terrestrial network.
FIG. 2A is a conceptual diagram illustrating a third exemplary embodiment of a non-terrestrial network.
FIG. 2B is a conceptual diagram illustrating a fourth exemplary embodiment of a non-terrestrial network.
FIG. 2C is a conceptual diagram illustrating a fifth exemplary embodiment of a non-terrestrial network.
FIG. 3 is a block diagram illustrating a first exemplary embodiment of a communication node constituting a non-terrestrial network.
FIG. 4 is a block diagram illustrating a first exemplary embodiment of communication nodes performing communication.
FIG. 5A is a block diagram illustrating a first exemplary embodiment of a transmission path.
FIG. 5B is a block diagram illustrating a first exemplary embodiment of a reception path.
FIG. 6A is a conceptual diagram illustrating a first exemplary embodiment of a protocol stack of a user plane in a transparent payload-based non-terrestrial network.
FIG. 6B is a conceptual diagram illustrating a first exemplary embodiment of a protocol stack of a control plane in a transparent payload-based non-terrestrial network.
FIG. 7A is a conceptual diagram illustrating a first exemplary embodiment of a protocol stack of a user plane in a regenerative payload-based non-terrestrial network.
FIG. 7B is a conceptual diagram illustrating a first exemplary embodiment of a protocol stack of a control plane in a regenerative payload-based non-terrestrial network.
FIG. 8 is a conceptual diagram illustrating exemplary embodiments of a non-terrestrial network (NTN).
FIG. 9 is a conceptual diagram illustrating exemplary embodiments of a non-terrestrial network.
FIG. 10 is a conceptual diagram illustrating exemplary embodiments of a TDW determination method for DMRS bundling.
FIG. 11 is a conceptual diagram illustrating exemplary embodiments of a TDW determination method for DMRS bundling.
FIG. 12 is a conceptual diagram illustrating exemplary embodiments of a TDW determination method for DMRS bundling.
FIG. 13 is a conceptual diagram illustrating exemplary embodiments of a method of determining a TDW for DMRS bundling.

[Best mode of the Invention]

While the present disclosure is capable of various modifications and alternative forms, specific embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the spirit and scope of the present disclosure. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

In the present disclosure, "at least one of A and B" may mean "at least one of A or B" or "at least one of combinations of one or more of A and B". Also, in exemplary embodiments of the present disclosure, "one or more of A and B" may mean "one or more of A or B" or "one or more of combinations of one or more of A and B".

In the present disclosure, "(re)transmission" may refer to "transmission", "retransmission", or "transmission and retransmission", "(re)configuration" may refer to "configuration", "reconfiguration", or "configuration and reconfiguration", "(re)connection" may refer to "connection", "reconnection", or "connection and reconnection", and "(re)access" may mean "access", "re-access", or "access and re-access".

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

The terminology used herein is for the purpose of describing particular embodiments only and is not intended to be limiting of the present disclosure. As used herein, the singular forms are intended to include the plural forms as well, unless the context clearly indicates otherwise. It will be further understood that the terms "comprise" and/or "include" when used herein, specify the presence of stated features, integers, steps, operations, elements, components or combinations thereof, but do not preclude the presence or addition of one or more other features, integers, steps, operations, elements, components, and/or combinations thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present disclosure will be described in greater detail with reference to the accompanying drawings. In order to facilitate general understanding in describing the present disclosure, the same components in the drawings are denoted with the same reference signs, and repeated description thereof will be omitted. In addition to the exemplary embodiments explicitly described in the present disclosure, operations may be performed according to a combination of the exemplary embodiments, extensions of the exemplary embodiments, and/or modifications of the exemplary embodiments. Performance of some operations may be omitted, and the order of performance of operations may be changed.

Even when a method (e.g. transmission or reception of a signal) performed at a first communication node among communication nodes is described, a corresponding second communication node may perform a method (e.g. reception or transmission of the signal) corresponding to the method performed at the first communication node. That is, when an operation of a user equipment (UE) is described, a base station corresponding to the UE may perform an operation corresponding to the operation of the UE. Conversely, when an operation of a base station is described, a UE corresponding to the base station may perform an operation corresponding to the operation of the base station. In a non-terrestrial network (NTN) (e.g. payload-based NTN), operations of a base station may refer to operations of a satellite, and operations of a satellite may refer to operations of a base station.

The base station may refer to a NodeB, evolved NodeB (eNodeB), next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and/or the like. The UE may refer to a terminal, device, apparatus, node, communication node, end node, access terminal, mobile terminal, station, subscriber station, mobile station, portable subscriber station, on-broad unit (OBU), and/or the like.

In the present disclosure, signaling may be at least one of higher layer signaling, medium access control (MAC) signaling, or physical (PHY) signaling. Messages used for higher layer signaling may be referred to as 'higher layer messages' or 'higher layer signaling messages'. Messages used for MAC signaling may be referred to as 'MAC messages' or 'MAC signaling messages'. Messages used for PHY signaling may be referred to as 'PHY messages' or 'PHY signaling messages'. The higher layer signaling may refer to a transmission and reception operation of system information (e.g. master information block (MIB), system information block (SIB)) and/or radio resource control (RRC) messages. The MAC signaling may refer to a transmission and reception operation of a MAC control element (CE). The PHY signaling may refer to a transmission and reception operation of control information (e.g. downlink control information (DCI), uplink control information (UCI), and sidelink control information (SCI)).

In the present disclosure, "an operation (e.g. transmission operation) is configured" may mean that "configuration information (e.g. information element(s) or parameter(s)) for the operation and/or information indicating to perform the operation is signaled". "Information element(s) (e.g. parameter(s)) are configured" may mean that "corresponding information element(s) are signaled". In the present disclosure, "signal and/or channel" may mean a signal, a channel, or "signal and channel," and "signal" may be used to mean "signal and/or channel".

A communication system may include at least one of a terrestrial network, non-terrestrial network, 4G communication network (e.g. long-term evolution (LTE) communication network), 5G communication network (e.g. new radio (NR) communication network), or 6G communication network. Each of the 4G communications network, 5G communications network, and 6G communications network may include a terrestrial network and/or a non-terrestrial network. The non-terrestrial network may operate based on at least one communication technology among the LTE communication technology, 5G communication technology, or 6G communication technology. The non-terrestrial network may provide communication services in various frequency bands.

The communication network to which exemplary embodiments are applied is not limited to the content described below, and the exemplary embodiments may be applied to various communication networks (e.g. 4G communication network, 5G communication network, and/or 6G communication network). Here, a communication network may be used in the same sense as a communication system.

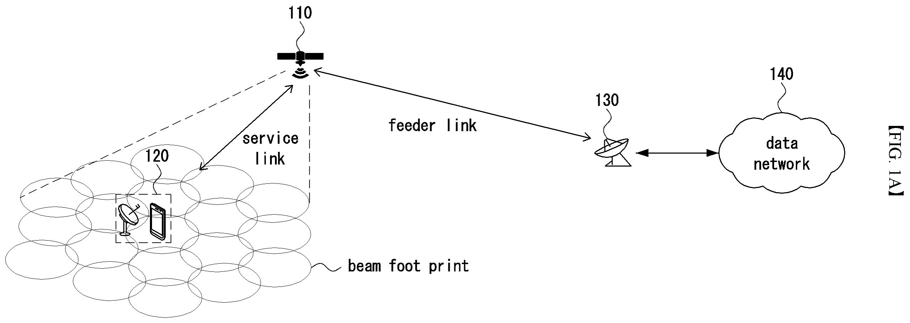

FIG. 1A is a conceptual diagram illustrating a first exemplary embodiment of a non-terrestrial network.

As shown in FIG. 1A, a non-terrestrial network (NTN) may include a satellite 110, a communication node 120, a gateway 130, a data network 140, and the like. A unit including the satellite 110 and the gateway 130 may correspond to a remote radio unit (RRU). The NTN shown in FIG. 1A may be an NTN based on a transparent payload. The satellite 110 may be a low earth orbit (LEO) satellite, a medium earth orbit (MEO) satellite, a geostationary earth orbit (GEO) satellite, a high elliptical orbit (HEO) satellite, or an unmanned aircraft system (UAS) platform. The UAS platform may include a high altitude platform station (HAPS). A non-GEO satellite may be an LEO satellite and/or MEO satellite.

The communication node 120 may include a communication node (e.g. a user equipment (UE) or a terminal) located on a terrestrial site and a communication node (e.g. an airplane, a drone) located on a non-terrestrial space. A service link may be established between the satellite 110 and the communication node 120, and the service link may be a radio link. The satellite 110 may provide communication services to the communication node 120 using one or more beams. The shape of a footprint of the beam of the satellite 110 may be elliptical or circular.

In the non-terrestrial network, three types of service links can be supported as follows.

- Earth-fixed: a service link may be provided by beam(s) that continuously cover the same geographic area at all times (e.g. geosynchronous orbit (GSO) satellite).
- quasi-Earth-fixed: a service link may be provided by beam(s) covering one geographical area during a limited period and provided by beam(s) covering another geographical area during another period (e.g. non-GSO (NGSO) satellite forming steerable beams).
- earth-moving: a service link may be provided by beam(s) moving over the Earth's surface (e.g. NGSO satellite forming fixed beams or non-steerable beams).

The communication node 120 may perform communications (e.g. downlink communication and uplink communication) with the satellite 110 using 4G communication technology, 5G communication technology, and/or 6G communication technology. The communications between the satellite 110 and the communication node 120 may be performed using an NR-Uu interface and/or 6G-Uu interface. When dual connectivity (DC) is supported, the communication node 120 may be connected to other base stations (e.g. base stations supporting 4G, 5G, and/or 6G functionality) as well as the satellite 110, and perform DC operations based on the techniques defined in 4G, 5G, and/or 6G technical specifications.

The gateway 130 may be located on a terrestrial site, and a feeder link may be established between the satellite 110 and the gateway 130. The feeder link may be a radio link. The gateway 130 may be referred to as a 'non-terrestrial network (NTN) gateway'. The communications between the satellite 110 and the gateway 130 may be performed based on an NR-Uu interface, a 6G-Uu interface, or a satellite radio interface (SRI). The gateway 130 may be connected to the data network 140. There may be a 'core network' between the gateway 130 and the data network 140. For example, the gateway 130 may be connected to the core network, and the core network may be connected to the data network 140. The core network may support the 4G communication technology, 5G communication technology, and/or 6G communication technology. For example, the core network may include an access and mobility management function (AMF), a user plane function (UPF), a session management function (SMF), and the like. The communications between the gateway 130 and the core network may be performed based on an NG-C/U interface or 6G-C/U interface.

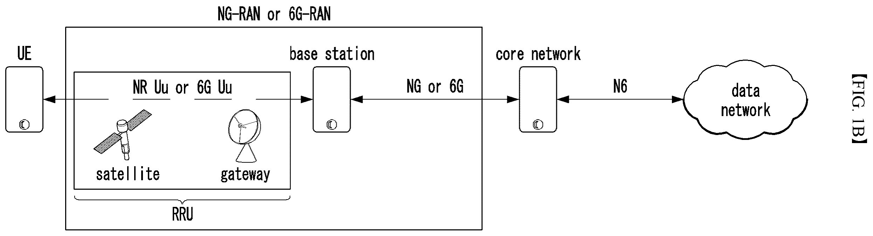

As shown in an exemplary embodiment of FIG. 1B, there may be a 'core network' between the gateway 130 and the data network 140 in a transparent payload-based NTN.

FIG. 1B is a conceptual diagram illustrating a second exemplary embodiment of a non-terrestrial network.

As shown in FIG. 1B, the gateway may be connected with the base station, the base station may be connected with the core network, and the core network may be connected with the data network. Each of the base station and core network may support the 4G communication technology, 5G communication technology, and/or 6G communication technology. The communications between the gateway and the base station may be performed based on an NR-Uu interface or 6G-Uu interface, and the communications between the base station and the core network (e.g. AMF, UPF, SMF, and the like) may be performed based on an NG-C/U interface or 6G-C/U interface.

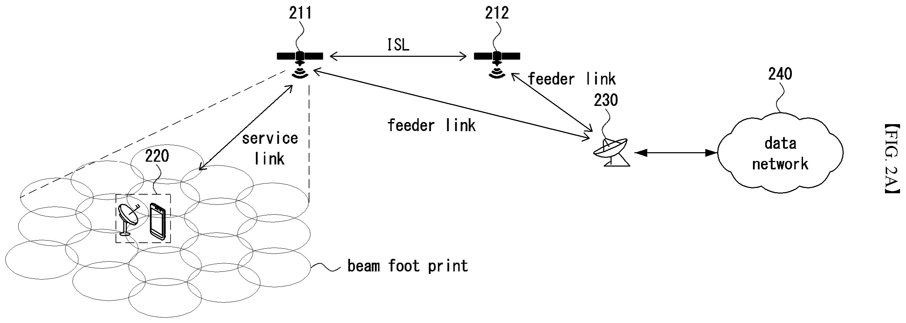

FIG. 2A is a conceptual diagram illustrating a third exemplary embodiment of a non-terrestrial network.

As shown in FIG. 2A, a non-terrestrial network may include a first satellite 211, a second satellite 212, a communication node 220, a gateway 230, a data network 240, and the like. The NTN shown in FIG. 2A may be a regenerative payload based NTN. For example, each of the satellites 211 and 212 may perform a regenerative operation (e.g. demodulation, decoding, re-encoding, re-modulation, and/or filtering operation) on a payload received from other entities (e.g. the communication node 220 or the gateway 230), and transmit the regenerated payload.

Each of the satellites 211 and 212 may be a LEO satellite, a MEO satellite, a GEO satellite, a HEO satellite, or a UAS platform. The UAS platform may include a HAPS. The satellite 211 may be connected to the satellite 212, and an inter-satellite link (ISL) may be established between the satellite 211 and the satellite 212. The ISL may operate in an RF frequency band or an optical band. The ISL may be established optionally. The communication node 220 may include a terrestrial communication node (e.g. UE or terminal) and a non-terrestrial communication node (e.g. airplane or drone). A service link (e.g. radio link) may be established between the satellite 211 and communication node 220. The satellite 211 may provide communication services to the communication node 220 using one or more beams.

The communication node 220 may perform communications (e.g. downlink communication or uplink communication) with the satellite 211 using the 4G communication technology, 5G communication technology, and/or 6G communication technology. The communications between the satellite 211 and the communication node 220 may be performed using an NR-Uu interface or 6G-Uu interface. When DC is supported, the communication node 220 may be connected to other base stations (e.g. base stations supporting 4G, 5G, and/or 6G functionality) as well as the satellite 211, and may perform DC operations based on the techniques defined in 4G, 5G, and/or 6G technical specifications.

The gateway 230 may be located on a terrestrial site, a feeder link may be established between the satellite 211 and the gateway 230, and a feeder link may be established between the satellite 212 and the gateway 230. The feeder link may be a radio link. When the ISL is not established between the satellite 211 and the satellite 212, the feeder link between the satellite 211 and the gateway 230 may be established mandatorily. The communications between each of the satellites 211 and 212 and the gateway 230 may be performed based on an NR-Uu interface, a 6G-Uu interface, or an SRI. The gateway 230 may be connected to the data network 240.

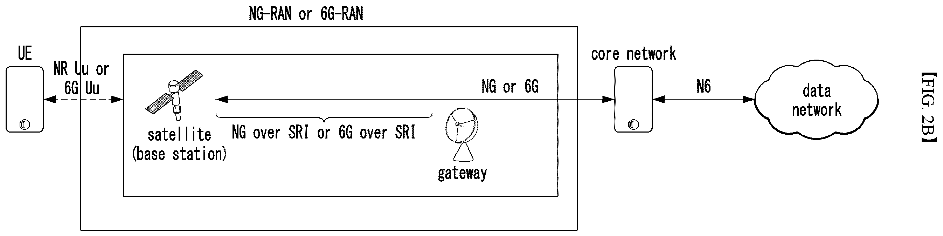

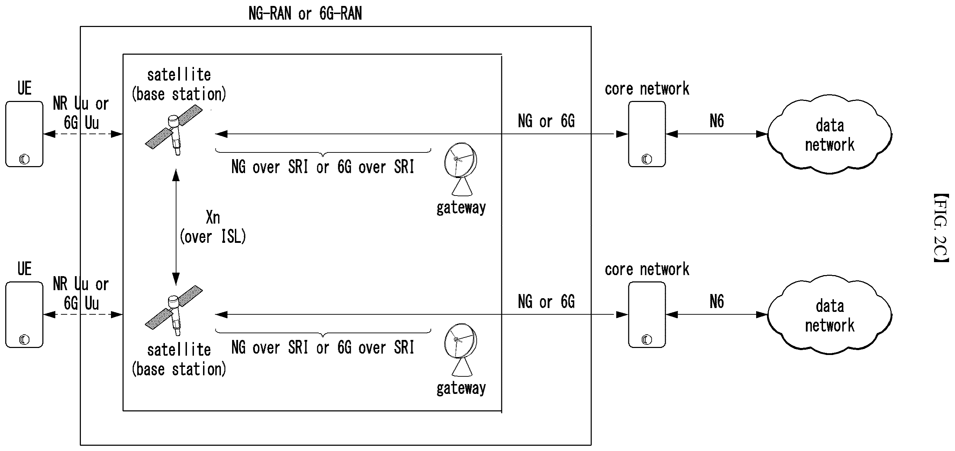

As shown in exemplary embodiments of FIG. 2B and FIG. 2C, there may be a 'core network' between the gateway 230 and the data network 240.

FIG. 2B is a conceptual diagram illustrating a fourth exemplary embodiment of a non-terrestrial network, and FIG. 2C is a conceptual diagram illustrating a fifth exemplary embodiment of a non-terrestrial network.

As shown in FIG. 2B and FIG. 2C, the gateway may be connected with the core network, and the core network may be connected with the data network. The core network may support the 4G communication technology, 5G communication technology, and/or 6G communication technology. For example. The core network may include AMF, UPF, SMF, and the like. Communication between the gateway and the core network may be performed based on an NG-C/U interface or 6G-C/U interface. Functions of a base station may be performed by the satellite. That is, the base station may be located on the satellite. A payload may be processed by the base station located on the satellite. Base stations located on different satellites may be connected to the same core network. One satellite may have one or more base stations. In the non-terrestrial network of FIG. 2B, an ISL between satellites may not be established, and in the non-terrestrial network of FIG. 2C, an ISL between satellites may be established.

Meanwhile, the entities (e.g. satellite, base station, UE, communication node, gateway, and the like) constituting the non-terrestrial network shown in FIGS. 1A, 1B, 2A, 2B, and/or 2C may be configured as follows. In the present disclosure, the entity may be referred to as a communication node.

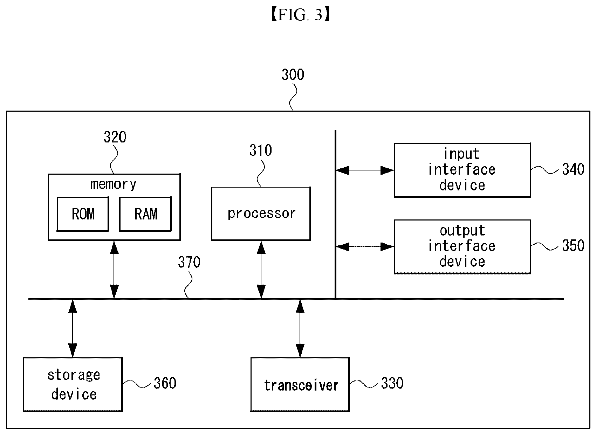

FIG. 3 is a block diagram illustrating a first exemplary embodiment of a communication node constituting a non-terrestrial network.

As shown in FIG. 3, a communication node 300 may include at least one processor 310, a memory 320, and a transceiver 330 connected to a network to perform communication. In addition, the communication node 300 may further include an input interface device 340, an output interface device 350, a storage device 360, and the like. The components included in the communication node 300 may be connected by a bus 370 to communicate with each other.

However, each component included in the communication node 300 may be connected to the processor 310 through a separate interface or a separate bus instead of the common bus 370. For example, the processor 310 may be connected to at least one of the memory 320, the transceiver 330, the input interface device 340, the output interface device 350, and the storage device 360 through a dedicated interface.

The processor 310 may execute at least one instruction stored in at least one of the memory 320 and the storage device 360. The processor 310 may refer to a central processing unit (CPU), a graphics processing unit (GPU), or a dedicated processor on which the methods according to the exemplary embodiments of the present disclosure are performed. Each of the memory 320 and the storage device 360 may be configured as at least one of a volatile storage medium and a nonvolatile storage medium. For example, the memory 320 may be configured with at least one of a read only memory (ROM) and a random access memory (RAM).

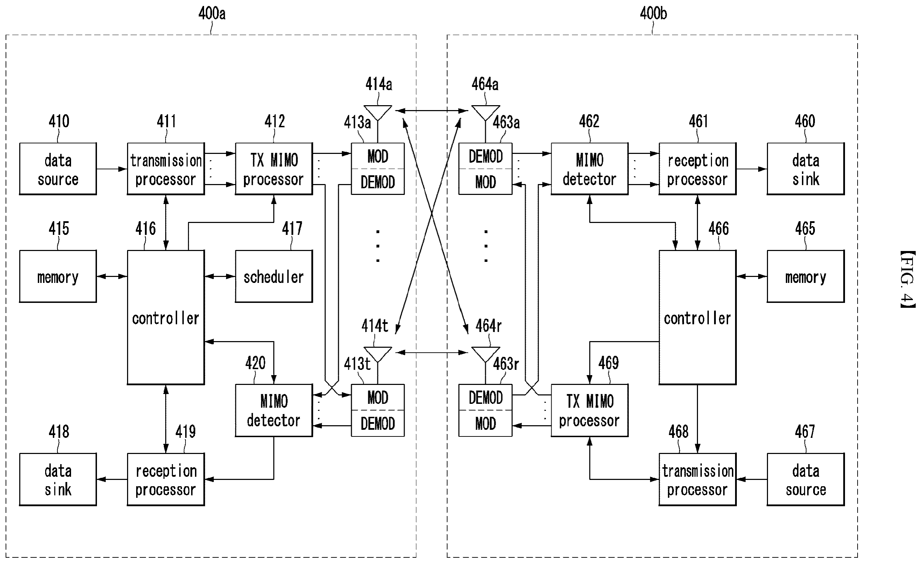

Meanwhile, communication nodes that perform communications in the communication network (e.g. non-terrestrial network) may be configured as follows. A communication node shown in FIG. 4 may be a specific exemplary embodiment of the communication node shown in FIG. 3.

FIG. 4 is a block diagram illustrating a first exemplary embodiment of communication nodes performing communication.

As shown in FIG. 4, each of a first communication node 400a and a second communication node 400b may be a base station or UE. The first communication node 400a may transmit a signal to the second communication node 400b. A transmission processor 411 included in the first communication node 400a may receive data (e.g. data unit) from a data source 410. The transmission processor 411 may receive control information from a controller 416. The control information may include at least one of system information, RRC configuration information (e.g. information configured by RRC signaling), MAC control information (e.g. MAC CE), or PHY control information (e.g. DCI, SCI).

The transmission processor 411 may generate data symbol(s) by performing processing operations (e.g. encoding operation, symbol mapping operation, etc.) on the data. The transmission processor 411 may generate control symbol(s) by performing processing operations (e.g. encoding operation, symbol mapping operation, etc.) on the control information. In addition, the transmission processor 411 may generate synchronization/reference symbol(s) for synchronization signals and/or reference signals.

A Tx MIMO processor 412 may perform spatial processing operations (e.g. precoding operations) on the data symbol(s), control symbol(s), and/or synchronization/reference symbol(s). An output (e.g. symbol stream) of the Tx MIMO processor 412 may be provided to modulators (MODs) included in transceivers 413a to 413t. The modulator may generate modulation symbols by performing processing operations on the symbol stream, and may generate signals by performing additional processing operations (e.g. analog conversion operations, amplification operation, filtering operation, up-conversion operation, etc.) on the modulation symbols. The signals generated by the modulators of the transceivers 413a to 413t may be transmitted through antennas 414a to 414t.

The signals transmitted by the first communication node 400a may be received at antennas 464a to 464r of the second communication node 400b. The signals received at the antennas 464a to 464r may be provided to demodulators (DEMODs) included in transceivers 463a to 463r. The demodulator (DEMOD) may obtain samples by performing processing operations (e.g. filtering operation, amplification operation, down-conversion operation, digital conversion operation, etc.) on the signals. The demodulator may perform additional processing operations on the samples to obtain symbols. A MIMO detector 462 may perform MIMO detection operations on the symbols. A reception processor 461 may perform processing operations (e.g. de-interleaving operation, decoding operation, etc.) on the symbols. An output of the reception processor 461 may be provided to a data sink 460 and a controller 466. For example, the data may be provided to the data sink 460 and the control information may be provided to the controller 466.

On the other hand, the second communication node 400b may transmit signals to the first communication node 400a. A transmission processor 469 included in the second communication node 400b may receive data (e.g. data unit) from a data source 467 and perform processing operations on the data to generate data symbol(s). The transmission processor 468 may receive control information from the controller 466 and perform processing operations on the control information to generate control symbol(s). In addition, the transmission processor 468 may generate reference symbol(s) by performing processing operations on reference signals.

A Tx MIMO processor 469 may perform spatial processing operations (e.g. precoding operations) on the data symbol(s), control symbol(s), and/or reference symbol(s). An output (e.g. symbol stream) of the Tx MIMO processor 469 may be provided to modulators (MODs) included in the transceivers 463a to 463t. The modulator may generate modulation symbols by performing processing operations on the symbol stream, and may generate signals by performing additional processing operations (e.g. analog conversion operation, amplification operation, filtering operation, up-conversion operations) on the modulation symbols. The signals generated by the modulators of the transceivers 463a to 463t may be transmitted through the antennas 464a to 464t.

The signals transmitted by the second communication node 400b may be received at the antennas 414a to 414r of the first communication node 400a. The signals received at the antennas 414a to 414r may be provided to demodulators (DEMODs) included in the transceivers 413a to 413r. The demodulator may obtain samples by performing processing operations (e.g. filtering operation, amplification operation, down-conversion operation, digital conversion operation) on the signals. The demodulator may perform additional processing operations on the samples to obtain symbols. A MIMO detector 420 may perform a MIMO detection operation on the symbols. The reception processor 419 may perform processing operations (e.g. de-interleaving operation, decoding operation, etc.) on the symbols. An output of the reception processor 419 may be provided to a data sink 418 and the controller 416. For example, the data may be provided to the data sink 418 and the control information may be provided to the controller 416.

Memories 415 and 465 may store the data, control information, and/or program codes. A scheduler 417 may perform scheduling operations for communication. The processors 411, 412, 419, 461, 468, and 469 and the controllers 416 and 466 shown in FIG. 4 may be the processor 310 shown in FIG. 3, and may be used to perform methods described in the present disclosure.

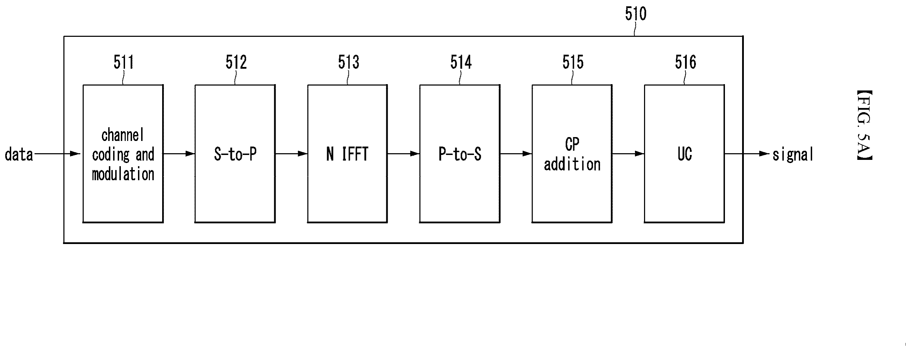

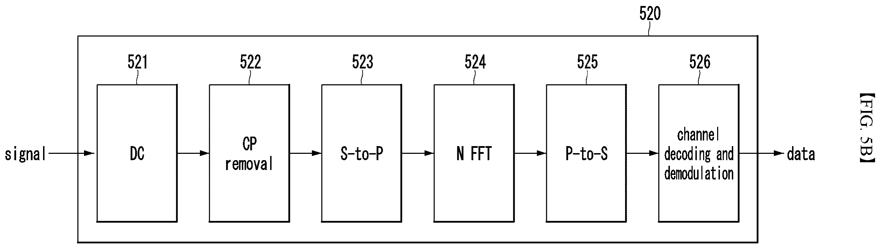

FIG. 5A is a block diagram illustrating a first exemplary embodiment of a transmission path, and FIG. 5B is a block diagram illustrating a second exemplary embodiment of a reception path.

As shown in FIGS. 5A and 5B, a transmission path 510 may be implemented in a communication node that transmits signals, and a reception path 520 may be implemented in a communication node that receives signals. The transmission path 510 may include a channel coding and modulation block 511, a serial-to-parallel (S-to-P) block 512, an N-point inverse fast Fourier transform (N-point IFFT) block 513, a parallel-to-serial (P-to-S) block 514, a cyclic prefix (CP) addition block 515, and up-converter (UC) 516. The reception path 520 may include a down-converter (DC) 521, a CP removal block 522, an S-to-P block 523, an N-point FFT block 524, a P-to-S block 525, and a channel decoding and demodulation block 526. Here, N may be a natural number.

In the transmission path 510, information bits may be input to the channel coding and modulation block 511. The channel coding and modulation block 511 may perform a coding operation (e.g. low-density parity check (LDPC) coding operation, polar coding operation, etc.) and a modulation operation (e.g. Quadrature Phase Shift Keying (OPSK), Quadrature Amplitude Modulation (QAM), etc.) on the information bits. An output of the channel coding and modulation block 511 may be a sequence of modulation symbols.

The S-to-P block 512 may convert frequency domain modulation symbols into parallel symbol streams to generate N parallel symbol streams. N may be the IFFT size or the FFT size. The N-point IFFT block 513 may generate time domain signals by performing an IFFT operation on the N parallel symbol streams. The P-to-S block 514 may convert the output (e.g., parallel signals) of the N-point IFFT block 513 to serial signals to generate the serial signals.

The CP addition block 515 may insert a CP into the signals. The UC 516 may up-convert a frequency of the output of the CP addition block 515 to a radio frequency (RF) frequency. Further, the output of the CP addition block 515 may be filtered in baseband before the up-conversion.

The signal transmitted from the transmission path 510 may be input to the reception path 520. Operations in the reception path 520 may be reverse operations for the operations in the transmission path 510. The DC 521 may down-convert a frequency of the received signals to a baseband frequency. The CP removal block 522 may remove a CP from the signals. The output of the CP removal block 522 may be serial signals. The S-toP block 523 may convert the serial signals into parallel signals. The N-point FFT block 524 may generate N parallel signals by performing an FFT algorithm. The P-to-S block 525 may convert the parallel signals into a sequence of modulation symbols. The channel decoding and demodulation block 526 may perform a demodulation operation on the modulation symbols and may restore data by performing a decoding operation on a result of the demodulation operation.

In FIGS. 5A and 5B, discrete Fourier transform (DFT) and inverse DFT (IDFT) may be used instead of FFT and IFFT. Each of the blocks (e.g. components) in FIGS. 5A and 5B may be implemented by at least one of hardware, software, or firmware. For example, some blocks in FIGS. 5A and 5B may be implemented by software, and other blocks may be implemented by hardware or a combination of hardware and software. In FIGS. 5A and 5B, one block may be subdivided into a plurality of blocks, a plurality of blocks may be integrated into one block, some blocks may be omitted, and blocks supporting other functions may be added.

Meanwhile, NTN reference scenarios may be defined as shown in Table 1 below.

[Table 1]

|  | **NTN shown in FIG. 1** | **NTN shown in FIG. 2** |
|---|---|---|
| GEO | Scenario A | Scenario B |
| LEO (steerable beams) | Scenario C1 | Scenario D1 |
| LEO (beams moving with satellite) | Scenario C2 | Scenario D2 |

When the satellite 110 in the NTN shown in FIG. 1A and/or FIG. 1B is a GEO satellite (e.g. a GEO satellite that supports a transparent function), this may be referred to as 'scenario A'. When the satellites 211 and 212 in the NTN shown in FIG. 2A, FIG. 2B, and/or FIG. 2C are GEO satellites (e.g. GEOs that support a regenerative function), this may be referred to as 'scenario B'.

When the satellite 110 in the NTN shown in FIG. 1A and/or FIG. 1B is an LEO satellite with steerable beams, this may be referred to as 'scenario C1'. When the satellite 110 in the NTN shown in FIG. 1A and/or FIG. 1B is an LEO satellite having beams moving with the satellite, this may be referred to as 'scenario C2'. When the satellites 211 and 212 in the NTN shown in FIG. 2A, FIG. 2B, and/or FIG. 2C are LEO satellites with steerable beams, this may be referred to as 'scenario D1'. When the satellites 211 and 212 in the NTN shown in FIG. 2A, FIG. 2B, and/or FIG. 2C are LEO satellites having beams moving with the satellites, this may be referred to as 'scenario D2'.

Parameters for the NTN reference scenarios defined in Table 1 may be defined as shown in Table 2 below.

[Table 2]

|  | **Scenarios A and B** | **Scenarios C and D** |
|---|---|---|
| Altitude | 35,786 km | 600 km<br>1,200 km |

(continued)

|  | Scenarios A and B | Scenarios C and D |
|---|---|---|
| Spectrum (service link) | < 6 GHz (e.g. 2 GHz)<br>> 6 GHz (e.g. DL 20 GHz, UL 30 GHz) | |
| Maximum channel bandwidth capability (service link) | 30 MHz for band <6 GHz<br>1 GHz for band >6 GHz | |
| Maximum distance between satellite and communication node (e.g. UE) at the minimum elevation angle | 40,581 km | 1,932 km (altitude of 600 km)<br>3,131 km (altitude of 1,200 km) |
| Maximum round trip delay (RTD) (only propagation delay) | Scenario A: 541.46 ms (service and feeder links)<br>Scenario B: 270.73 ms (only service link) | Scenario C: (transparent payload: service and feeder links)<br><br>-5.77 ms (altitude of 60 0km) |
|  |  | -41.77 ms (altitude of 1,200 km)<br>Scenario D: (regenerative payload: only service link)<br>-12.89 ms (altitude of 600 km)<br>-20.89 ms (altitude of 1,200 km) |
| Maximum differential delay within a cell | 10.3 ms | 3.12 ms (altitude of 600 km)<br>3.18 ms (altitude of 1,200 km) |
| Service link | NR defined in 3GPP | |
| Feeder link | Radio interfaces defined in 3GPP or non-3GPP | |

In addition, in the scenarios defined in Table 1, delay constraints may be defined as shown in Table 3 below.

[Table 3]

|  | Scenario A | Scenario B | Scenario C1-2 | Scenario D1-2 |
|---|---|---|---|---|
| Satellite altitude | 35,786 km | | 600 km | |
| Maximum RTD in a radio interface between base station and UE | 541.75 ms (worst case) | 270.57 ms | 28.41 ms | 12.88 ms |
| Minimum RTD in a radio interface between base station and UE | 477.14 ms | 238.57 ms | 8 ms | 4 ms |

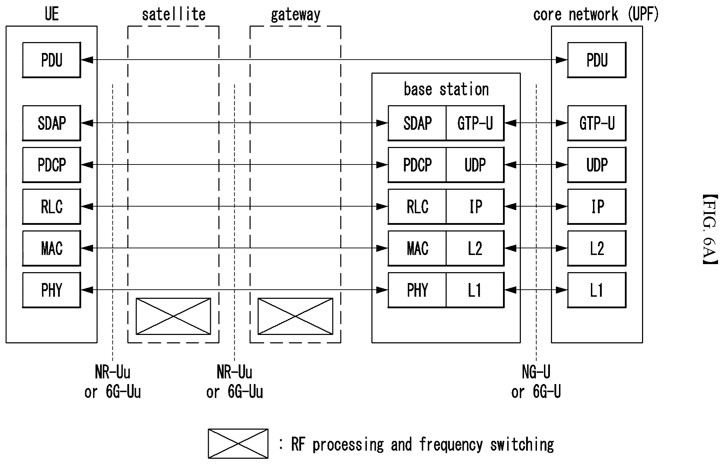

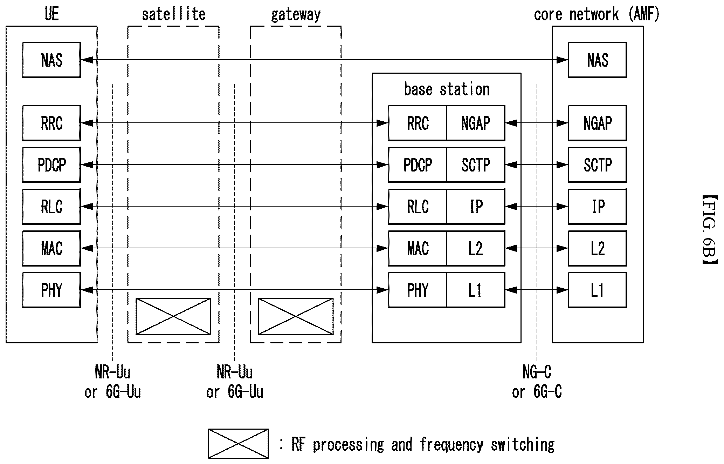

FIG. 6A is a conceptual diagram illustrating a first exemplary embodiment of a protocol stack of a user plane in a transparent payload-based non-terrestrial network, and FIG. 6B is a conceptual diagram illustrating a first exemplary embodiment of a protocol stack of a control plane in a transparent payload-based non-terrestrial network.

As shown in FIGS. 6A and 6B, user data may be transmitted and received between a UE and a core network (e.g. UPF), and control data (e.g. control information) may be transmitted and received between the UE and the core network (e.g. AMF). Each of the user data the and control data may be transmitted and received through a satellite and/or gateway. The protocol stack of the user plane shown in FIG. 6A may be applied identically or similarly to a 6G communication network. The protocol stack of the control plane shown in FIG. 6B may be applied identically or similarly to a 6G communication network.

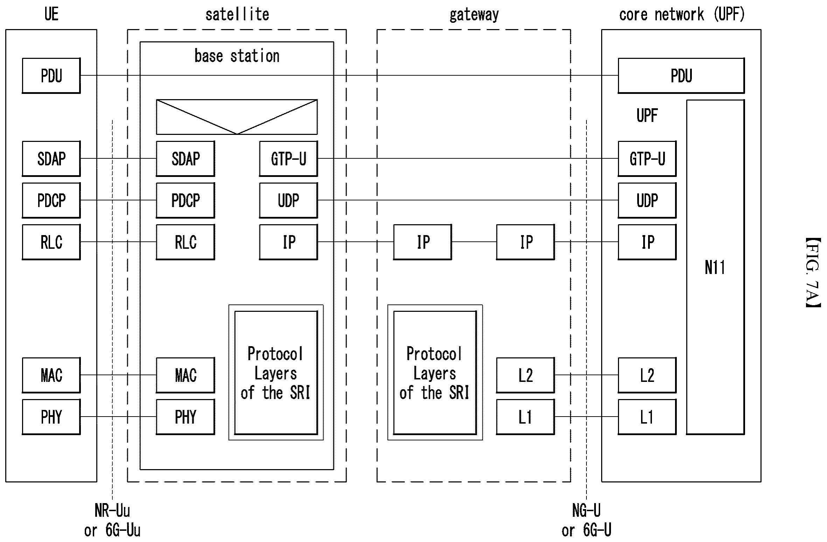

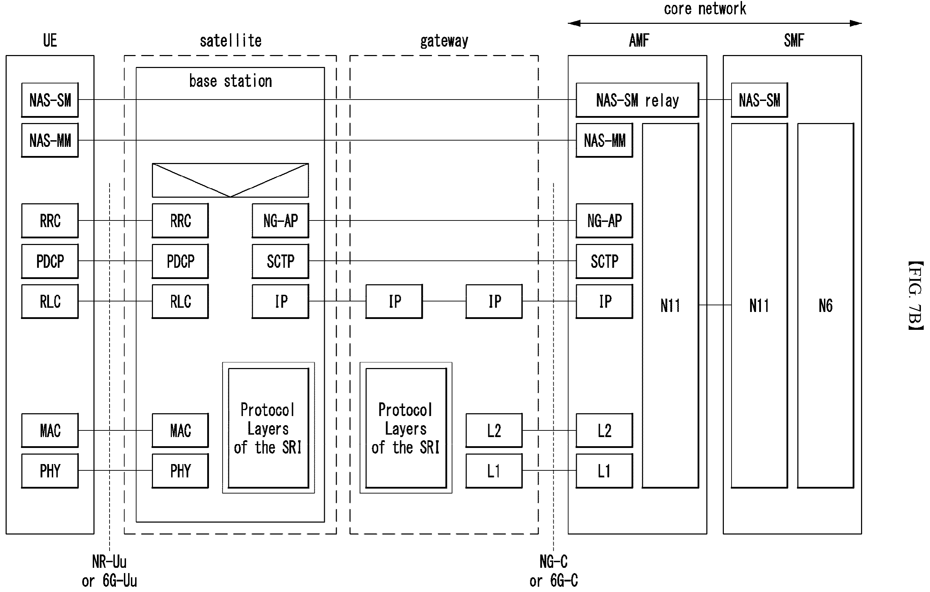

FIG. 7A is a conceptual diagram illustrating a first exemplary embodiment of a protocol stack of a user plane in a regenerative payload-based non-terrestrial network, and FIG. 7B is a conceptual diagram illustrating a first exemplary embodiment of a protocol stack of a control plane in a regenerative payload-based non-terrestrial network.

As shown in FIGS. 7A and 7B, each of user data and control data (e.g. control information) may be transmitted and received through an interface between a UE and a satellite (e.g. base station). The user data may refer to a user protocol data unit (PDU). A protocol stack of a satellite radio interface (SRI) may be used to transmit and receive the user data and/or control data between the satellite and a gateway. The user data may be transmitted and received through a general packet radio service (GPRS) tunneling protocol (GTP)-U tunnel between the satellite and a core network.

Meanwhile, in a non-terrestrial network, a base station may transmit system information (e.g. SIB19) including satellite assistance information for NTN access. A UE may receive the system information (e.g. SIB 19) from the base station, identify the satellite assistance information included in the system information, and perform communication (e.g. non-terrestrial communication) based on the satellite assistance information. The SIB19 may include information element(s) defined in Table 4 below.

[Table 4]

| | |
|---|---|
| SIB19-r17 ::= SEQUENCE { | |
| ntn-Config-r17 | NTN-Config-r17 |
| t-Service-r17 | INTEGER(0..549755813887) |
| referenceLocation-r17 | ReferenceLocation-r17 |
| distanceThresh-r17 | INTEGER(0..65525) |
| ntn-NeighCellConfigList-r17 | NTN-NeighCellConfigList-r17 |
| lateNonCriticalExtension | OCTET STRING |
| ..., | |
| [[ | |
| ntn-NeighCellConfigListExt-v1720 | NTN-NeighCellConfigList-r17 |
| ]] | |
| } | |
| NTN-NeighCellConfigList-r17 ::= OF NTN-NeighCellConfig-r17 | SEQUENCE (SIZE(1..maxCellNTN-r17)) |
| NTN-NeighCellConfig-r17 ::= | SEQUENCE { |
| ntn-Config-r17 | NTN-Config-r17 |
| carrierFreq-r17 | ARFCN-ValueNR |
| physCellId-r17 | PhysCellId |
| } | |

*NTN-Config* defined in Table 4 may include information element(s) defined in Table 5 below.

[Table 5]

```
NTN-Config-r17 ::=                    SEQUENCE {
    epochTime-r17                     EpochTime-r17
    ntn-UlSyncValidityDuration-r17 ENUMERATED{ s5, s10, s15, s20, s25, s30, s35,
s40, s45, s50, s55, s60, s120, s180, s240, s900}
    cellSpecificKoffset-r17           INTEGER(1..1023)
    kmac-r17                          INTEGER(1..512)
    ta-Info-r17                       TA-Info-r17
    ntn-PolarizationDL-r17            ENUMERATED {rhcp,lhcp,linear}
    ntn-PolarizationUL-r17            ENUMERATED {rhcp,lhcp,linear}
```

```
    ephemerisInfo-r17                 EphemerisInfo-r17
    ta-Report-r17                     ENUMERATED {enabled}
    ...
}
EpochTime-r17 ::=                     SEQUENCE {
    sfn-r17                           INTEGER(0..1023),
    subFrameNR-r17                    INTEGER(0..9)
}
TA-Info-r17 ::=                       SEQUENCE   {
    ta-Common-r17                     INTEGER(0..66485757),
    ta-CommonDrift-r17                INTEGER(-257303..257303)
    ta-CommonDriftVariant-r17         INTEGER(0..28949)
}
```

*EphemerisInfo* defined in Table 5 may include information element(s) defined in Table 6 below.

[Table 6]

```
EphemerisInfo-r17 ::=           CHOICE {
      positionVelocity-r17            PositionVelocity-r17,
      orbital-r17                     Orbital-r17
}
PositionVelocity-r17 ::=        SEQUENCE {
      positionX-r17                   PositionStateVector-r17,
      positionY-r17                   PositionStateVector-r17,
      positionZ-r17                   PositionStateVector-r17,
      velocityVX-r17                  VelocityStateVector-r17,
      velocityVY-r17                  VelocityStateVector-r17,
      velocityVZ-r17                  VelocityStateVector-r17
}
Orbital-r17 ::=                 SEQUENCE {
      semiMajorAxis-r17               INTEGER (0..8589934591),
      eccentricity-r17                INTEGER (0..1048575),
      periapsis-r17                   INTEGER (0..268435455),
      longitude-r17                   INTEGER (0..268435455),
```

```
      inclination-r17                 INTEGER (-67108864..67108863),
      meanAnomaly-r17                 INTEGER (0..268435455)
}
PositionStateVector-r17 ::= INTEGER (-33554432..33554431)
VelocityStateVector-r17 ::= INTEGER (-131072..131071)
```

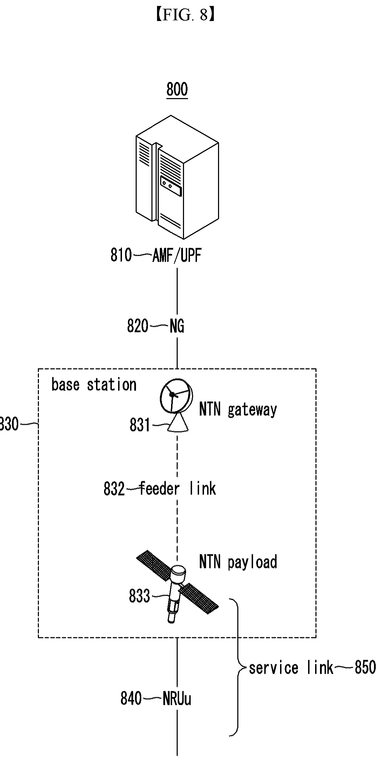

FIG. 8 is a conceptual diagram illustrating exemplary embodiments of a non-terrestrial network (NTN).

As shown in FIG. 8, an NTN may include at least one of an access management function (AMF)/user plane function (UPF) 810 or a base station 830. The base station may include at least one of an NTN payload 833 or an NTN gateway 831. The NTN payload 833 may be a network node included in a high altitude platform station (HAPS) that provides a connectivity between a service link 850 and a feeder link 832. The NTN gateway 831 may be an Earth station deployed on the Earth's surface. The NTN gateway 831 may be a transport network layer (TNL) node. The NTN gateway 831 may use the feeder link and may provide connectivity to the NTN payload 833.

The NTN may provide non-terrestrial NR access to a terminal. The NTN may provide non-terrestrial NR access to a terminal via the NTN payload 833 and the NTN gateway 831. A link between the NTN payload 833 and the terminal may be referred to as the service link 850. A link between the NTN gateway 831 and the NTN payload 833 may be referred to as the feeder link 832. The feeder link may correspond to a radio link.

The NTN payload 833 may receive radio protocol data from the terminal through the service link. The NTN payload 833 may transparently deliver the radio protocol data to the NTN gateway 831 through the feeder link. The NTN payload 833 and the NTN gateway 831 may perform communication with the terminal through a common radio protocol interface, Uu interface. The NTN payload 833 and the NTN gateway 831 may perform radio protocol communication with the terminal as a single base station 830. The NTN gateway 831 may perform communication with a core network entity 800 (AMF or UPF) through an NG interface.

FIG. 8 illustrates one NTN payload 833 and one NTN gateway 831 included in the base station 830, but exemplary embodiments of the present disclosure are not limited thereto. For example, the base station may be associated with a plurality of NTN payloads. The NTN payload may be served by a plurality of NTN gateways.

Meanwhile, the NTN may have issues related to coverage due to propagation delays and satellite movements. To resolve issues occurring in the NTN, procedures for general NR coverage enhancement may be applied to the NTN environment. The procedures for coverage enhancement may be applied by taking into account characteristics related to the NTN environment. The procedures for coverage enhancement may be applied when voice and low-speed data services are used via a smartphone. The procedures for coverage enhancement may be applied by considering regulatory requirements such as antenna gain and International Telecommunication Union (ITU) limitations on power flux density. The procedures for coverage enhancement may include the following procedures.

The NTN may perform a procedure for evaluating coverage performance to enhance coverage performance. In the NTN environment, a procedure for identifying a radio channel having a problem in coverage performance of a cell performing a VoIP service for a commercial handset terminal may be performed. In the NTN environment, a procedure for identifying a radio channel having a problem in coverage performance of a cell performing a low-capacity data service may be performed. A radio access network (RAN) may determine whether enhancement and/or improvement of NTN-related coverage performance is needed.

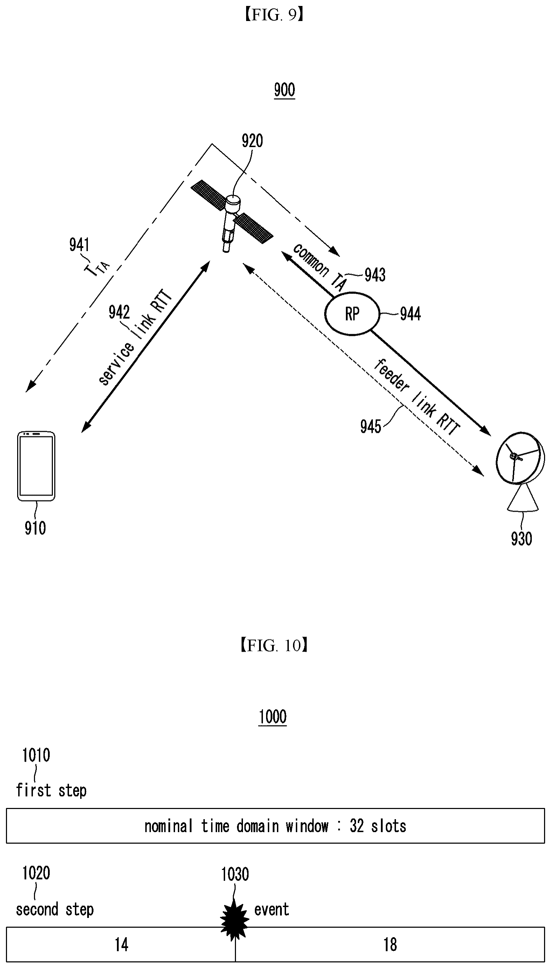

FIG. 9 is a conceptual diagram illustrating exemplary embodiments of a non-terrestrial network.

As shown in FIG. 9, in an NTN environment, a terminal and a base station may use a common TA and a scheduling offset to address a propagation delay. The scheduling offset may include at least one of $K_{offset}$ and $K_{mac}$. The common TA 941 may refer to an offset corresponding to a round trip time (RTT) between a reference point (RP) and an NTN payload. $K_{offset}$ may refer to a scheduling offset greater than or equal to a sum of a service link RTT 942 and the common TA 941. $K_{mac}$ may refer to a scheduling offset greater than or equal to an RTT between the RP 944 and the base station.

In the NTN environment, the terminal may receive ephemeris information of a satellite or common TA parameter from a serving cell through broadcast. The terminal may obtain GNSS location information and/or common TA information before connecting to an NTN cell. The terminal may calculate an RTT between the terminal and the RP for synchronization with the base station. To calculate the RTT between the terminal and the RP, the terminal may use at least one of ephemeris information, common TA information, or GNSS location information. The terminal may perform a pre-compensation procedure for $T_{TA}$ using the RTT between the terminal and the RP. The terminal may continuously perform the timing pre-compensation procedure. However, due to the characteristics of the NTN, the RTT between the terminal and the base station may rapidly increase or decrease within a time domain window. When the RTT rapidly increases or decreases, a timing advance (TA) adjustment procedure for demodulation reference signal (DMRS) bundling may be needed within a slot duration of the time domain window.

NTN-dedicated bundling for PUSCH DMRS may be performed by the terminal to enhance coverage performance. An environment with an NTN elevation angle of 30 degrees, subcarrier spacing (SCS) of 15 kHz, and an LEO altitude of 1200km may be assumed. PUSCH DMRS bundling needs to satisfy a limit range of phase difference without causing phase discontinuity. In other words, in the case of PUSCH DMRS bundling, the terminal may perform pre-compensation to keep a phase rotation caused by a timing drift of the terminal within the phase difference limit (range). When a phase discontinuity that violates the phase difference limit (range) is caused, the terminal may not perform a TA pre-compensation update within an actual time domain window (TDW).

In the case of PUSCH DMRS bundling in the NTN environment, the terminal may determine a TDW. When determining a TDW, the terminal may consider a configuration of the base station. Methods for the terminal to determine a TDW for DMRS bundling may be as follows.

FIG. 10 is a conceptual diagram illustrating exemplary embodiments of a TDW determination method for DMRS bundling.

As shown in FIG. 10, procedures for NR coverage enhancement may consider a TN environment. Unlike the TN environment, in the NTN environment, the RTT between the terminal and the base station may rapidly increase or decrease. The procedures for NR coverage enhancement do not consider the phenomenon of rapidly changing RTT in the NTN environment and thus a TA adjustment procedure may not be performed in the NTN environment. In the NTN environment, depending on the altitude and elevation angle of the satellite, the RTT may rapidly increase or decrease within multiple slots. When DMRS bundling is performed in the NTN environment, a time at which TA adjustment is needed may occur within a slot duration. The present disclosure proposes a procedure for TA adjustment within a duration in which DMRS bundling is performed. Methods proposed in the present disclosure may be applied to a PUSCH transmission to which DMRS bundling is applied.

The PUSCH transmission to which DMRS bundling is applied may include the following transmissions. The PUSCH transmission may include a PUSCH transmission according to a PUSCH repetition type A, which is scheduled by DCI 0_1 or DCI 0_2. The PUSCH transmission may include a PUSCH transmission according to a configured grant. The PUSCH transmission may include a PUSCH transmission according to a PUSCH repetition type B. The PUSCH transmission may include a PUSCH transmission for TB processing over multiple slots. In other words, the PUSCH transmission may include a PUSCH transmission for processing a TB included in multiple slots. The PUSCH transmission to which DMRS bundling is applied may be referred to as repeated transmission.

In other words, the present disclosure proposes a configuration procedure for TA adjustment timing and adjustment value and a signaling method for the adjustment, when performing a bundling procedure for uplink DMRS in the NTN environment. An actual TDW determination procedure for DMRS bundling may include the following steps.

The actual TDW determination procedure for DMRS bundling may include a step 1010 of determining a nominal TDW and a step 1020 of determining an actual TDW.

Step 1010 of determining a nominal TDW may be as follows.

The terminal may perform a procedure for determining a nominal TDW for DMRS bundling. The terminal may determine a nominal TDW for PUSCH transmission in the following cases. For example, when the terminal transmits at least one of a PUSCH repetition Type A scheduled by DCI format 0_1 or DCI format 0_2, a PUSCH repetition Type A according to a configured grant, or a PUSCH repetition Type B repeatedly transmitted over multiple slots, the terminal may determine a nominal TDW. The terminal may determine a nominal TDW for TB processing. The terminal may determine a TDW when PUSCH-DMRS bundling is activated or when PUCCH-DMRS bundling is activated. The terminal may determine a TDW for PUCCH transmission with PUCCH repetition.

The base station may transmit information on a duration of nominal TDW to the terminal. A duration of each nominal TDW, excluding a nominal TDW located at the end, may be determined by *PUSCH- TimeDomainWindowLength.* When *PUSCH-TimeDomainWindowLength* is not configured, the duration of the nominal TDW may be configured as a minimum time (i.e. *maxDurationDMRS-Bundling,* M). The minimum time *(maxDurationDMRS-Bundling,* M) may refer to a maximum duration of nominal TDW according to the terminal's capability. M may indicate a duration of continuous slots for PUSCH transmission according to N and K. In the case of a PUSCH transmission of PUSCH repetition Type A, N is 1, and K may indicate a repetition factor. In the case of a PUSCH transmission of PUSCH repetition Type B, N is 1, and K may indicate a general repetition factor. In the case of a PUSCH transmission for TB processing over multiple slots, N may indicate the number of slots used for determining a transport block size (TBS), and K may indicate a repetition factor of the number of slots N used for determining the TBS.

In the case of a PUCCH transmission with PUCCH repetition, a duration of each nominal TDW, excluding a nominal TDW located at the end, may indicate the number of continuous slots. In the case of a PUCCH transmission with PUCCH repetition, a duration of a TDW may be determined by *PUCCH- TimeDomainWindowLength.* When *PUCCH-TimeDomainWindowLength* is not configured, a duration of a TDW may be calculated as a minimum time *(maxDurationDMRS-Bundling,* M). The minimum time *(maxDurationDMRS-Bundling,* M) may indicate a maximum duration of nominal TDW. The minimum time *(maxDurationDMRS-Bundling,* M) may indicate a duration from the first slot to the last slot of the repeatedly transmitted PUCCH.

The terminal may receive the information on the duration of nominal TDW transmitted by the base station. The terminal may configure a nominal TDW using the information on the duration of TDW. The nominal TDW may be configured with continuous or discontinuous slots.

When performing repeated PUSCH transmission, the terminal may determine at least one nominal TDW. Each TDW may not have overlapping durations with others. A PUSCH instance may become a starting time of the first nominal TDW. The duration of the nominal TDW may be configured by *PUSCH- TimeDomainWindowLength.* Slots allocated to the PUSCH may be continuous for *PUSCH- TimeDomain WindowLength* and may constitute one nominal TDW.

When at least one of a PUSCH repetition Type A scheduled by DCI format 0_1 or DCI format 0_2, a PUSCH repetition Type A according to a configured grant, or a PUSCH Type B repeatedly transmitted over multiple slots is transmitted, the nominal TDW may include at least one actual TDW. The terminal may determine actual TDW(s) by the following method.

Step 1020 of determining actual TDW(s) may be as follows. The terminal may determine an actual TDW. The terminal may divide one nominal TDW into one or more actual TDWs. A boundary at which the TDW is divided may be determined based on a time at which an event occurs.

The terminal may configure a start of an actual TDW to the first symbol of the first transmitted PUSCH. The terminal may configure an end of an actual TDW to the last symbol of the last transmitted PUSCH. When an event 1030 in which signal consistency and/or phase continuity is not maintained in PUSCH transmission occurs, the terminal may configure the last symbol of a PUSCH transmission before the event as an end of an actual TDW. When *pusch-WindowRestart* is enabled, the terminal may configure the first symbol of the first PUSCH after the event, in which signal consistency and phase continuity are not maintained in PUSCH transmission, as a start of a new actual TDW. The method for determining actual TDW(s) when PUSCH is repeatedly transmitted may be similarly applied to determine actual TDW(s) when PUCCH is repeatedly transmitted. The terminal may maintain signal consistency and phase continuity within the actual TDW.

The event may refer to a case in which signal consistency and phase continuity are not maintained in PUSCH transmission. In other words, the event at which the TDW is divided may indicate an incident in which signal consistency (power consistency or phase continuity) is not guaranteed. The event at which the TDW is divided may indicate an incident caused by a procedure such as frequency hopping or beam switching. The event may be classified as a semi-static event or a dynamic event. When an event occurs, the terminal may determine whether to start a new actual TDW. When determining whether to start a new actual TDW, the terminal may consider a classification (type) of the event or RRC configuration information transmitted by the base station. The RRC configuration may include the parameter *pusch-WindowRestart*. In the present disclosure, a new actual TDW may start when an event occurs *(pusch-WindowRestart = Enabled)*.

In other words, the terminal may determine a nominal TDW in the first step 1010. The nominal TDW may include 32 slots. The terminal may determine actual TDWs in the second step 1020. The terminal may divide the nominal TDW composed of 32 slots into two actual TDWs based on a time at which an event occurs. When the nominal TDW is divided into actual TDWs (when the event occurs), the terminal may adjust uplink timing. The terminal may adjust a TA for the PUSCH and transmit the PUSCH to the base station.

As a procedure for adjusting uplink timing, the terminal may perform the following procedures. The terminal may perform an uplink timing adjustment procedure based on a TA command message transmitted by the base station. The terminal may perform an autonomous TA adjustment procedure. The terminal may perform a TA pre-compensation procedure autonomously by considering information on an orbit of the satellite and the location of the terminal. The present disclosure proposes a plurality of methods for performing the TA adjustment procedure. The present disclosure may simultaneously or selectively use one or more proposed techniques.

Meanwhile, in relation to the autonomous TA adjustment procedure of the terminal, there may be a restriction in the NTN environment for coverage enhancement such that the terminal does not perform the autonomous TA adjustment procedure within each actual TDW. When the terminal performs a TA adjustment procedure, the autonomous TA adjustment procedure may be an event that breaks signal consistency. Since the base station does not know whether the terminal performs the autonomous TA adjustment procedure, there may be a restriction on the autonomous TA adjustment procedure.

In relation to the TA pre-compensation procedure of the terminal, the TA pre-compensation procedure may refer to a procedure in which the terminal actively adjusts a transmission timing of data by reflecting a delay time occurring in a service link and a feeder link. In the NTN environment, the terminal may perform an uplink timing pre-compensation procedure. The uplink timing pre-compensation procedure may correspond to an event that breaks signal consistency. Since the base station does not know whether the terminal performs the uplink timing pre-compensation procedure, there may be a restriction on the uplink timing pre-compensation procedure.

The restriction on an event in which signal consistency is not maintained may conflict with the NTN environment in which large variations in data transmission and reception timing occur. For example, when an NTN satellite at 600 km LEO altitude moves away from an elevation angle of 30 degrees, a propagation delay variation of 80 ns per 1 ms may occur. Due to the time variation amount, it may become impossible to satisfy an allowable error range for transmission timing within an actual TDW. Accordingly, the terminal may perform a TA adjustment procedure to allow the terminal to change transmission timing within a nominal TDW. The TA adjustment procedure may include an autonomous TA adjustment procedure of the terminal. The TA adjustment procedure may include an operation in which a value $T_{TA}$ is changed. This may be expressed as in Equation 1.

[Equation 1]

$$T_{TA} = \left( N_{TA} + N_{TA,offset} + N_{TA,adj}^{common} + N_{TA,adj}^{UE} \right) T_c$$

$T_{TA}$ may denote a timing advance value applied to the terminal. $N_{TA}$ may refer to a value according to a command transmitted by a gateway to the terminal in the form of a timing advance command used by the terminal to determine $T_{TA}$. For TA information in the NTN, $N_{TA,offset}$ may be additionally defined. $N_{TA,offset}$ may refer to a TA value commonly applied to the terminal. $N_{TA,adj}^{common}$ may be a value for compensating a delay time in the feeder link. $N_{TA,adj}^{UE}$ may be a value for compensating a delay time at the terminal. $T_c$ may be a basic time unit constant mainly used in an NR physical layer and may refer to a duration of $(4096 \times 480 \times 1000)^{-1}$ seconds.

In the present disclosure, an event at which a TA adjustment procedure is required to be performed due to timing drift in the NTN environment may be referred to as event-T. The event-T may cause a TA adjustment procedure performed by the terminal as instructed by the base station. The event-T may cause an autonomous TA pre-compensation procedure of the terminal.

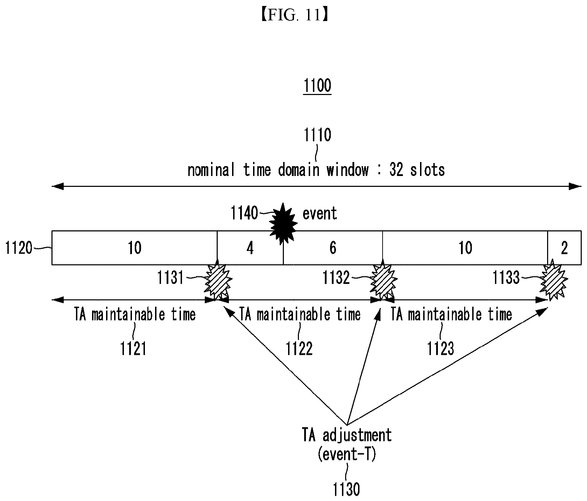

FIG. 11 is a conceptual diagram illustrating exemplary embodiments of a TDW determination method for DMRS bundling.

As shown in FIG. 11, the present disclosure proposes a method by which the terminal performs a TA adjustment procedure when an event-Toccurs. The base station may transmit information on a time at which an event-T 1130 occurs to the terminal. The base station may acquire a common TA and service link RTT information by using location information of the terminal and ephemeris information of the satellite. The base station may calculate at least one of a change rate (first derivative), a second derivative value, or a higher-order derivative value of each of the common TA and service link RTT. The base station may estimate and/or calculate a timing error due to timing drift based on at least one of the change rate (first derivative), the second derivative value, or the higher-order derivative value of each of the common TA and service link RTT. The base station may estimate a time during which DMRS bundling for a PUSCH transmitted by the terminal can be maintained without the terminal performing a TA adjustment procedure. In other words, the base station may calculate a TA maintainable time, and the TA maintainable time 1121, 1122, or 1123 may indicate a time during which DMRS bundling for a PUSCH transmitted by the terminal can be maintained without the terminal performing a TA adjustment procedure. The time during which PUSCH DMRS bundling can be maintained without TA adjustment may be referred to as a TA maintainable time or *durationUeTransmissionTiming.*

The base station may estimate and/or calculate the TA maintainable time. In other words, the base station may determine and/or configure the TA maintainable time. When determining and/or configuring the TA maintainable time, the base station may optionally consider hardware capability of the terminal. For example, the base station may configure the TA maintainable time by considering indicators representing reliability of components such as a temperature compensated crystal oscillator of the terminal and/or a power amplifier of the terminal. The terminal may transmit hardware capability information to the base station.

The TA maintainable time may be information transmitted by the base station to the terminal. The TA maintainable time may include at least one of information on a period in slot units or symbol units.

To reduce an amount of information for the TA maintainable time, the base station may utilize an indicator of the TA maintainable time and a predefined mapping table. The mapping table may include TA maintainable times and indexes (e.g. indicators) corresponding to the TA maintainable times. In other words, to reduce the amount of information for the TA maintainable time, the base station may transmit an indicator *index_durationUeTransmissionTiming* for a TA maintainable time to the terminal. The base station may transmit the indicator for the TA maintainable time through a MAC-CE and/or RRC message. The terminal may receive the indicator transmitted by the base station and may identify the TA maintainable time corresponding to the indicator from the mapping table. The predefined mapping table may be represented as in Table 7.

[Table 7]

| Indicator (*index_durationUeTransmissionTiming*) | *duration UeTransmissionTiming* |
|---|---|
| 0 | 8 |
| 1 | 10 |
| ... | ... |
| 7 | 32 |

The terminal may store the mapping table of Table 7. The content of the mapping table may be fixed information. Alternatively, content (information) of the predefined mapping table may be transmitted by the base station to the terminal through an RRC configuration.

The terminal may acquire the TA maintainable time through a downlink signal transmitted by the base station. The terminal may acquire the indicator of the TA maintainable time through the downlink signal transmitted by the base station. The terminal may acquire the TA maintainable time by using the indicator of the TA maintainable time and the mapping table.

The terminal may perform a TA adjustment procedure at a time when the TA maintainable time is reached, based on a specific time. In other words, the terminal may perform the TA adjustment procedure at a time after the TA maintainable time elapses from the specific time. The specific time may refer to at least one of the first PUSCH slot of a repeated transmission, the first PUSCH slot of a time when the last TA adjustment procedure has been performed, or the first PUSCH slot of a started actual TDW.

The terminal may perform a TA adjustment procedure. In other words, the terminal may determine a time at which the TA adjustment procedure is to be performed. For example, it may be assumed that a nominal TDW 1110 is composed of 32 slots and that a TA maintainable time 1121, 1122, or 1123 corresponds to 10 slots. The terminal may configure actual TDWs 1120. A method for configuring the actual TDWs 1120 may be as follows.

The terminal may perform the TA adjustment procedure (1130) after the TA maintainable time 1121 of 10 slots elapses from a specific time 1131, which corresponds to the first PUSCH slot of the repeated transmission (e.g. the first slot of 1120). In other words, the terminal may determine a time after the TA maintainable time from the PUSCH repeated transmission time as the time for performing the TA adjustment procedure.

The terminal may perform the TA adjustment procedure (1130) after the TA maintainable time 1122 of 10 slots elapses from a specific time 1132. The specific time 1132 may refer to a time at which the last performed TA adjustment procedure 1131 has been completed. In other words, during repeated PUSCH transmission, the terminal may determine a time after the TA maintainable time elapses from the time at which the last TA adjustment procedure has been performed as the time for performing the TA adjustment procedure.

The terminal may perform the TA adjustment procedure (1130) after the TA maintainable time 1123 of 10 slots elapses from a specific time 1133. The specific time 1133 may refer to a time at which the last performed TA adjustment procedure 1132 has been completed.

An event 1140 that is not a TA adjustment procedure may occur within the nominal TDW. There may be a total of five actual TDWs, and the actual TDWs may be composed of 10 slots, 4 slots, 6 slots, 10 slots, and 2 slots, respectively.

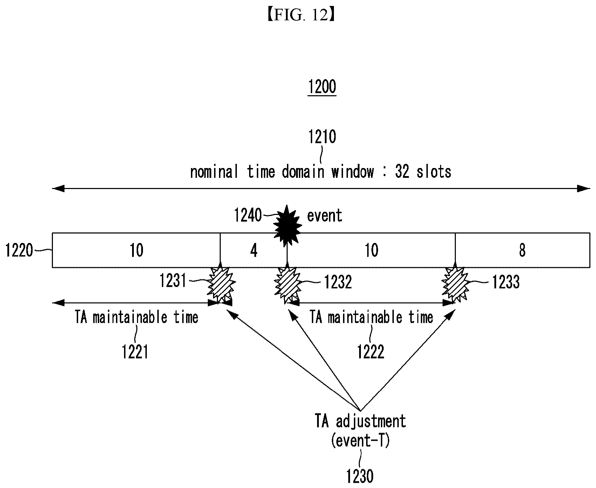

FIG. 12 is a conceptual diagram illustrating exemplary embodiments of a TDW determination method for DMRS bundling.

As shown in FIG. 12, when performing the TA adjustment procedure, the terminal may determine a sign of a TA variation and a magnitude of the TA variation. The TA variation (change value) may be expressed as *T-TaBackoff*. In other words, the variation value $T_{TA,new}$ - $T_{TA,old}$ of $T_{TA}$ may be expressed as *T-TaBackoff* (notation: $T_{TA,backoff}$).

The sign of $T_{TA,backoff}$ may be determined based on location information. The location information may include at least one of location information of the terminal, ephemeris information of the satellite, or location information of the ground station in the case of a transparent satellite. When the terminal and the satellite move farther apart and the length of the service link increases, the terminal needs to advance its uplink timing, so the magnitude of $T_{TA}$ may increase. When the magnitude of $T_{TA}$ increases, the variation of $T_{TA}$ may be a positive value. When the terminal and the satellite move closer and the length of the service link decreases, the terminal needs to delay its uplink timing, so the magnitude of $T_{TA}$ may decrease. When the magnitude of $T_{TA}$ decreases, the variation of $T_{TA}$ may be a negative value.

The terminal may determine the magnitude of $T_{TA,backoff}$ by the following method. The terminal may fix the magnitude of $T_{TA,backoff}$ used in the TA adjustment procedure. For example, a method in which the terminal adjusts timing by a fixed amount of $16 \times 64 \times T_c$ whenever an event-T occurs may be proposed.

The base station may indicate the magnitude of $T_{TA,backoff}$ to the terminal through a MAC-CE and/or RRC signaling. The terminal may adjust TA by the magnitude of $T_{TA,backoff}$ transmitted by the base station. The base station may explicitly indicate the magnitude of $T_{TA,backoff}$ to the terminal. The base station may implicitly indicate the magnitude of $T_{TA,backoff}$ by configuring a mapping table for the magnitude of $T_{TA,backoff}$ corresponding to a TA maintainable time. For example, when the TA maintainable time is 8 slots, the base station may configure a mapping table so that the terminal adjusts TA by $T_{TA,0}$. When the TA maintainable time is 10 slots, the base station may configure a mapping table so that the terminal adjusts TA by $T_{TA,10}$.

The base station may indicate the sign of $T_{TA,backoff}$ and the magnitude of $T_{TA,backoff}$ to the terminal, separately. Additionally, the base station may indicate the sign and magnitude of $T_{TA,backoff}$ as one variable. In other words, the base station may transmit an indicator of a TA adjustment value to the terminal through signaling. The TA adjustment value may include at least one of the sign of $T_{TA,backoff}$ or the magnitude of $T_{TA,backoff}$. The terminal may determine the TA adjustment value using the indicator of the TA adjustment value and a mapping table for the TA adjustment value. The base station may transmit the mapping table for the adjustment value to the terminal through RRC signaling. The terminal may preconfigure the mapping table for the adjustment value. The mapping table for the adjustment value may be as shown in Table 8.

[Table 8]

| Indicator | TA adjustment value ($T_s = T_c$) |
|---|---|
| 0 | 0 |
| 1 | $+16 \times T_s/2^u$ |
| 2 | $-16 \times T_s/2^u$ |
| 3 | $+32 \times T_s/2^u$ |
| ... | ... |

The mapping table for the adjustment value as shown in Table 8 may be generated by considering SCS.

Referring again to FIG. 11, an event-T may occur at times when the 10th slot and 20th slot end. A new actual TDW may start from the first slot following the 10th slot or 20th slot. An event 1140 may occur at an end of the 14th slot of the nominal TDW 1110. Due to the event 1140 at the end of the 14th slot, a new actual TDW may start from the 15th slot. Since the time at which the 14th slot ends has not yet reached a time after the TA maintainable time, even if an event-T (TA adjustment procedure) does not occur, transmission may be possible within a timing error tolerance. However, if TA is adjusted through the TA adjustment procedure at the event time (i.e. end time of the 14th slot) to update uplink timing, the terminal may secure a longer length of the actual TDW after the 15th slot without further division of the actual TDW.

Referring again to FIG. 12, the present disclosure proposes a method for the terminal to perform the TA adjustment procedure when an event other than event-T occurs. In other words, when an event 1240 that is not an event-T occurs, the terminal may determine an actual TDW starting from the first slot after the occurrence of the event that is not an event-T. For example, it may be observed that the third actual TDW in FIG. 12 is longer than the third actual TDW in FIG. 11. The actual TDW after the third actual TDW may have a higher possibility of being longer on average. When the terminal performs the TA adjustment procedure due to the occurrence of an event, a joint channel estimation gain of each actual TDW may increase. In other words, when an event other than an event-T occurs, the terminal may perform the TA adjustment procedure, and the length of the actual TDW by the TA adjustment procedure may increase.

The terminal may utilize additional information to perform the TA adjustment procedure in an event other than an event-T. The additional information may include the following information. The additional information may include at least one of *enableTaAdjustmentForEveryEvent, T-TaBackoff,* or *minNrofSlot_ActualTDW_forTaAdjustment.*

*enableTaAdjustmentForEveryEvent* may refer to an indicator representing that the TA adjustment procedure is performed at an event. In other words, the terminal may perform the TA adjustment procedure at an arbitrary event through the indicator *enableTaAdjustmentForEveryEvent.* The arbitrary event may refer to an event other than an event-T. When the TA adjustment procedure is performed at the arbitrary event, an actual TDW as shown in FIG. 12 may be configured. When the TA adjustment procedure is not performed at the arbitrary event, an actual TDW as shown in FIG. 11 may be configured.

*T-TaBackoff* may refer to information regarding the magnitude of $T_{TA,backoff}$. When the event occurs and the TA adjustment procedure is performed, the terminal may determine the size of $T_{TA,backoff}$ according to a length of the actual time domain window just before the occurrence of the event. In other words, $T_{TA,backoff}$ may provide $T_{TA,backoff}(x)$ for a characteristic value x. The base station may configure $T_{TA,backoff}(x)$ in proportion to the size of x. For example, when $T_{TA,backoff}(x = 10) = 32 * 64 * T_c$ is given, the terminal may determine $T_{TA,backoff}(x = 5) = \frac{5}{10} T_{TA,backoff}(x = 10) = 16 * 64 * T_c$. In the process of configuring $T_{TA,backoff}(x)$, the base station may add at least one of quantization, round, floor, or ceiling in consideration of granularity of a basic time domain used for the TA adjustment procedure.

The terminal and the base station may share additional information for a table format to indicate $T_{TA,backoff}(x)$. The base station may transmit the information on the table to the terminal.

*minNrofSlot_ActualTDW_forTaAdjustment* may include information regarding a minimum size of an actual TDW. When an arbitrary event occurs and a size of the actual TDW just before the occurrence of the event is smaller than *minNrofSlot_ActualTDW_forTaAdjustment,* the terminal may not perform the TA adjustment procedure. The terminal may selectively utilize *minNrofSlot_Actual_TDW_forTaAdjustment.*

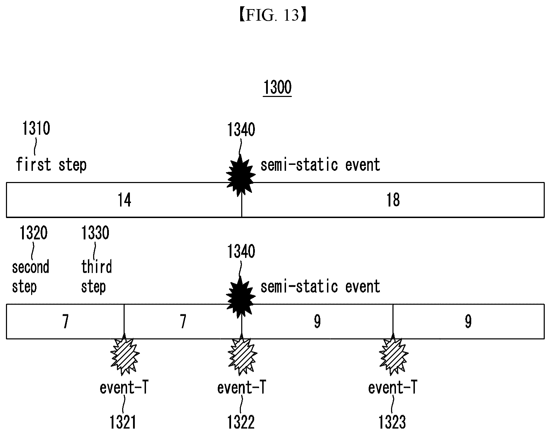

FIG. 13 is a conceptual diagram illustrating exemplary embodiments of a method of determining a TDW for DMRS bundling.

As shown in FIG. 13, the present disclosure proposes a method for reducing a frequency of occurrence of an actual TDW having a short length. Depending on a time of performing the TA adjustment procedure, a size of each actual TDW may have a large variation. For example, in the case of FIG. 12, the actual TDWs may consist of 10 slots, 4 slots, 10 slots, and 8 slots, respectively. When a length of the first actual TDW is 10 slots, a joint channel estimation gain may be relatively greater than that of other actual TDWs. When a length of the second actual TDW is 4 slots, a joint channel estimation gain may be relatively smaller than that of other actual TDWs. When the lengths of the first actual TDW and the second actual TDW are adjusted to 7 slots and 7 slots, respectively, a joint channel estimation gain of the first actual TDW may decrease. However, when the lengths of the first actual TDW and the second actual TDW are adjusted to 7 slots and 7 slots, respectively, a joint channel estimation gain of the second actual TDW may increase. From a communication theory perspective, an overall expected performance for the channel may be determined by a case having the smallest channel gain or the worst performance for the channel. Therefore, when the frequency of occurrence of the actual TDW having a short length is reduced, an average joint channel estimation gain may be improved. The following may represent a method of determining actual TDWs in order to reduce the frequency of occurrence of actual TDWs having a short length and acquire a stable joint channel estimation gain.

When a semi-static event 1340 other than an event-T occurs, the terminal may configure temporary TDWs (temporary_TDW) 1310.

The terminal may calculate a number of executions of the TA adjustment procedure in consideration of a TA maintainable time within each of the temporary TDWs. In other words, the terminal may calculate how many actual TDWs the temporary TDW (temporary_TDW) is divided into.

The terminal may determine a length and duration of each of the actual TDWs. The terminal may determine the length and duration of each of the actual time domain windows based on a ratio of a length (L_tTDW) of the temporary TDW to the number (N_actualTDW) of actual TDWs in the temporary TDW (i.e. L_tTDW/N_actualTDW). The terminal may perform the TA adjustment procedure (event-T) at a time corresponding to the length and duration of the actual TDW determined by the terminal. When the ratio of the length (L_tTDW) of the temporary TDW to the number (N_actualTDW) of the actual TDWs in the temporary time domain window (L_tTDW/N_actualTDW) is not divisible by a natural number, the terminal may configure the actual TDWs such that the total length is equal to the length of the temporary TDW by combining nearby natural numbers approximating the ratio of the number of the actual TDWs in the temporary TDW.

When a semi-static event occurs in a first step 1310, the terminal may divide a nominal TDW into temporary TDWs. For example, the terminal may divide a nominal TDW having 32 slots into temporary TDWs having 14 slots and 18 slots, respectively.

The terminal may divide the temporary TDW having 14 slots into respective actual TDWs having 7 slots and 7 slots through a second step 1320 and a third step 1330. The terminal may divide the temporary TDW having 18 slots into respective actual TDWs having 9 slots and 9 slots through the second step 1320 and the third step 1330. When comparing the actual TDWs of FIG. 12 and the actual TDWs of FIG. 13, a minimum value of the length of the actual TDWs in FIG. 13 may be relatively greater than that of the actual TDWs in FIG. 12.

In order to perform the first step 1310, the second step 1320, or the third step 1330, the terminal may receive at least one of *enableTaAdjustmentForEveryEvent, T-TaBackoff* (#slot_lastActualTDW), or *minNrofSlot_ActualTDW_for-TaAdjustment* from the base station.

The following proposes a method for the terminal to perform a TA pre-compensation procedure of the terminal. The method for performing the TA pre-compensation procedure of the terminal may be as follows.

The terminal may acquire an RTT value based on location information of the terminal and location information of the satellite. The terminal may perform a TA pre-compensation procedure using the acquired RTT value. The terminal may adjust uplink timing through the TA pre-compensation procedure. The TA pre-compensation procedure may allow the terminal to autonomously update the uplink timing. The TA pre-compensation procedure may be different from a procedure in which the base station transmits a TA value (e.g. a variation value for uplink transmission timing) to the terminal to adjust the TA. Through the TA pre-compensation procedure of the terminal, the terminal may update the uplink timing during a repeated transmission duration of a PUSCH. When an event for updating the uplink timing occurs and the terminal performs the TA pre-compensation procedure, the terminal may utilize a method of determining a TDW. The method of determining the actual TDW may include a method in which the terminal performs a TA adjustment procedure upon the occurrence of an event-T. The method of determining the actual TDW may include a method in which the terminal performs a TA adjustment procedure upon the occurrence of an event other than the event-T. The method of determining the actual TDW may include a method of reducing a frequency of occurrence of an actual TDW having a short length.

The terminal may transmit at least one of UE capability information or UE assistance information to the base station. The UE capability information or the UE assistance information may include information on the maximum TDW size. In other words, the UE capability information or the UE assistance information may include at least one of information on various maximum TDW sizes (Max_TDW_size) or information similar to the maximum TDW size. The maximum TDW size information transmitted by the terminal to the base station may be used through a newly defined field. The maximum TDW size information transmitted by the terminal to the base station may be used through a TDW_size field that can be supported by the terminal in the TN environment. The TDW_size field may indicate a duration during which the terminal can maintain consistency of power and/or continuity of phase.

A method in which the terminal performs a TA adjustment procedure when an event-T occurs may include a procedure in which the base station transmits information on a time for the TA adjustment procedure or a TA adjustment value (Update Value) to the terminal. A method in which the terminal performs a TA adjustment procedure when an event other than an event-T occurs may include a procedure in which the base station transmits information on a time for the TA adjustment procedure or a TA adjustment value to the terminal. A method for reducing the occurrence frequency of a TDW having a short length may include a procedure in which the base station transmits information on a time for the TA adjustment procedure or a TA adjustment value to the terminal. The TA pre-compensation procedure may include a method in which the base station transmits information on a time at which the TA adjustment procedure (e.g. the TA pre-compensation procedure) is to be performed to the terminal.

The time for performing the TA pre-compensation may be determined by the base station, and the base station may transmit information on the time for performing the TA pre-compensation to the terminal. The base station may determine the time for the TA pre-compensation by using the maximum TDW size (Max_TDW_size) information transmitted by the terminal.

In order to transmit information on the time for performing the TA pre-compensation, the base station may transmit information on a TA pre-compensation period to the terminal. The TA pre-compensation period may be configured in units of slot or OFDM symbol. The terminal may receive the information on the TA pre-compensation period from the base station. The terminal may perform the TA pre-compensation at a time according to the TA pre-compensation period. The information on the TA pre-compensation period may include information such as *durationUeTransmissionTiming*.

Since the terminal performs the TA pre-compensation, the terminal may not need to consider the configuration and/or transmission of a value such as *T- TaBackoff* of the base station. The time for determining the TA pre-compensation may refer to a time when the TA pre-compensation period expires (e.g. a time when the TA pre-compensation period is reached). The time for determining the TA pre-compensation may refer to a time when an event other than an event-T occurs. Details indicating the TA pre-compensation time may be the same as a time when a TA adjustment procedure is performed in a case where an event other than an event-T occurs. In other words, the information used to indicate the TA pre-compensation time may include the information used to indicate the time for performing the TA adjustment procedure.

The terminal may determine a time when an event-T occurs. The terminal may perform the TA pre-compensation procedure at the time of occurrence of the event-T. An actual TDW at the time of the TA pre-compensation procedure determined by the terminal may be similar to the actual TDW at the time for performing the TA adjustment procedure. Since the terminal performs the autonomous TA pre-compensation procedure, the transmission of the TA adjustment value (e.g. update value) from the base station may not be necessary.

The present disclosure may assume that the TA pre-compensation procedure is performed at the event-T. The present disclosure may assume that the TA pre-compensation procedure is performed for all events other than the event-T. Events other than the event-T (other events) may include dynamically determined events and semi-statically determined events.

When the terminal has limited capability, the terminal may not perform the TA pre-compensation procedure for a dynamic event. In order to perform a procedure for normal DMRS bundling and joint channel estimation, the terminal may transmit information on a capability of the terminal to the base station in advance. The capability of the terminal may refer to a capability that the terminal cannot perform the TA pre-compensation procedure at a dynamic event but can perform the TA pre-compensation procedure only at a semi-static event. The capability of the terminal may be referred to as *ta_preComp_OnDynamicEvent.*

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

**Claims**

1. A method of a user equipment (UE), comprising:

   receiving, from a base station, a signal including timing advance (TA) maintainable time information related to a time during which demodulation reference signal (DMRS) bundling is maintained;
   determining a time to perform a TA adjustment procedure based on the TA maintainable time information;
   performing the TA adjustment procedure at the determined time; and
   transmitting information on an adjusted TA to the base station.

2. The method of claim 1, further comprising:

acquiring an indicator for the TA maintainable time information included in the signal and contents of a mapping table for the TA maintainable time information; and
acquiring a TA maintainable time based on the indicator and the mapping table.

3. The method of claim 1, wherein the determining of the time to perform the TA adjustment procedure comprises: determining, as the time to perform the TA adjustment procedure, a time after a TA maintainable time elapses from a time of a repeated transmission of a physical uplink shared channel (PUSCH).

4. The method of claim 1, wherein the determining of the time to perform the TA adjustment procedure comprises: determining, as the time to perform the TA adjustment procedure, a time after a TA maintainable time elapses from a last execution time of the TA adjustment procedure, during repeated PUSCH transmission.

5. The method of claim 1, wherein the determining of the time to perform the TA adjustment procedure comprises: based on an actual time domain window (TDW) being configured, determining, as the time to perform the TA adjustment procedure, an expiration time of a TA maintainable time including the actual TDW.

6. The method of claim 1, wherein the determining of the time to perform the TA adjustment procedure comprises: determining, as the time to perform the TA adjustment procedure, a time after a TA maintainable time elapses from a time of occurrence of an event in which signal consistency is not maintained.

7. The method of claim 1, wherein the determining of the time to perform the TA adjustment procedure comprises:

configuring a temporary time domain window at a semi-static event;
calculating a number of actual time domain windows by dividing the temporary time domain window based on the TA maintainable time information;
determining a length of the actual time domain window by dividing a length of the temporary time domain window by the number of the actual time domain windows; and
determining an expiration time of the actual time domain window as the time to perform the TA adjustment procedure.

8. The method of claim 1, wherein the performing of the TA adjustment procedure at the determined time comprises:

receiving information on a TA variation through radio resource control (RRC) signaling;
determining a sign and a magnitude of the TA variation based on the received information; and
performing the TA adjustment procedure using the determined sign and magnitude.

9. A method of a base station, comprising:

transmitting, to a user equipment (UE), a signal including timing advance (TA) maintainable time information related to a time during which demodulation reference signal (DMRS) bundling is maintained; and
receiving, from the UE, information on an adjusted TA based on the TA maintainable time information.

10. The method of claim 9, further comprising: determining the TA maintainable time information based on at least one of location information of the UE or ephemeris information of a satellite.

11. The method of claim 9, wherein the transmitting of the signal including the TA maintainable time information to the UE comprises:

determining an indicator for the TA maintainable time information based on at least one of location information of the UE or ephemeris information of a satellite; and
transmitting, to the UE, the signal including an indicator corresponding to a mapping table for the TA maintainable time information.

12. The method of claim 9, further comprising:

receiving, from the UE, UE capability information including at least one of information on a temperature compensated crystal oscillator (TCXO) or a power amplifier (PA); and
determining the TA maintainable time information in consideration of the UE capability information.

**13.** A user equipment (UE) comprising at least one processor,
wherein the at least one processor causes the UE to perform:

receiving, from a base station, a signal including timing advance (TA) maintainable time information related to a time during which demodulation reference signal (DMRS) bundling is maintained;
determining a time to perform a TA adjustment procedure based on the TA maintainable time information;
performing the TA adjustment procedure at the determined time; and
transmitting information on an adjusted TA to the base station.

**14.** The UE of claim 13, wherein the at least one processor further causes the UE to perform:

acquiring an indicator for the TA maintainable time information included in the signal and contents of a mapping table for the TA maintainable time information; and
acquiring a TA maintainable time based on the indicator and the mapping table.

**15.** The UE of claim 13, wherein in the determining of the time to perform the TA adjustment procedure, the at least one processor causes the UE to perform: determining, as the time to perform the TA adjustment procedure, a time after a TA maintainable time elapses from a time of a repeated transmission of a physical uplink shared channel (PUSCH).

**16.** The UE of claim 13, wherein in the determining of the time to perform the TA adjustment procedure, the at least one processor causes the UE to perform: determining, as the time to perform the TA adjustment procedure, a time after a TA maintainable time elapses from a last execution time of the TA adjustment procedure, during repeated PUSCH transmission.

**17.** The UE of claim 13, wherein in the determining of the time to perform the TA adjustment procedure, the at least one processor causes the UE to perform: based on an actual time domain window (TDW) being configured, determining, as the time to perform the TA adjustment procedure, an expiration time of a TA maintainable time including the actual TDW.

**18.** The UE of claim 13, wherein in the determining of the time to perform the TA adjustment procedure, the at least one processor causes the UE to perform: determining, as the time to perform the TA adjustment procedure, a time after a TA maintainable time elapses from a time of occurrence of an event in which signal consistency is not maintained.

**19.** The UE of claim 13, wherein in the determining of the time to perform the TA adjustment procedure, the at least one processor causes the UE to perform:

configuring a temporary time domain window at a semi-static event;
calculating a number of actual time domain windows by dividing the temporary time domain window based on the TA maintainable time information;
determining a length of the actual time domain window by dividing a length of the temporary time domain window by the number of the actual time domain windows; and
determining an expiration time of the actual time domain window as the time to perform the TA adjustment procedure.

**20.** The UE of claim 13, wherein in the performing of the TA adjustment procedure at the determined time, the at least one processor causes the UE to perform:

receiving information on a TA variation through radio resource control (RRC) signaling;
determining a sign and a magnitude of the TA variation based on the received information; and
performing the TA adjustment procedure using the determined sign and magnitude.

【FIG. 1A】

[FIG. 1B]

NG-RAN or 6G-RAN

UE

base station

core network

NR Uu or 6G Uu

NG or 6G

N6

data network

satellite

gateway

RRU

25

【FIG. 2A】

【FIG. 2B】

【FIG. 2C】

【FIG. 3】

300

320    310

memory

| ROM | RAM |

processor

input
interface
device    340

output
interface
device    350

370

storage
device    360

transceiver    330

【FIG. 4】

【FIG. 5A】

**[FIG. 5B]**

520

| 521 | 522 | 523 | 524 | 525 | 526 |

signal → DC → CP removal → S-to-P → N FFT → P-to-S → channel decoding and demodulation → data

【FIG. 6A】

EP 4 665 018 A1

UE    satellite    gateway    core network (AMF)

| NAS | | | NAS |

base station

| RRC | NGAP | | NGAP |
| PDCP | SCTP | | SCTP |
| RLC | IP | | IP |
| MAC | L2 | | L2 |
| PHY | L1 | | L1 |

NR-Uu
or 6G-Uu

NR-Uu
or 6G-Uu

NG-C
or 6G-C

⊠ : RF processing and frequency switching

[FIG. 6B]

【FIG. 7A】

【FIG. 7B】

【FIG. 8】

800

810—AMF/UPF

820—NG

base station

830—

831 NTN gateway

832—feeder link

NTN payload

833

service link—850

840—NRUu

【FIG. 9】

900

【FIG. 10】

1000

1010
first step

| nominal time domain window : 32 slots |
|---|

1020
second step

1030

event

| 14 | 18 |
|---|---|

【FIG. 11】

1100

1110

nominal time domain window : 32 slots

1140 — event

1120 —

| 10 | 4 | 6 | 10 | 2 |

1131 —

1132

1133 —

TA maintainable time

1121

TA maintainable time

1122

TA maintainable time

1123

TA adjustment
(event-T)

1130

【FIG. 12】

1200

1210

nominal time domain window : 32 slots

1240 —✶ event

1220—

| 10 | 4 | 10 | 8 |

1231—  1232  1233

TA maintainable time          TA maintainable time

1221                              1222

TA adjustment
(event-T)

1230

【FIG. 13】

## EP 4 665 018 A1

<table>
<tr><td colspan="2" align="center"><strong>INTERNATIONAL SEARCH REPORT</strong></td><td>International application No.<br><br><strong>PCT/KR2024/006503</strong></td></tr>
</table>

<table>
<tr><td colspan="3"><strong>A.    CLASSIFICATION OF SUBJECT MATTER</strong><br><br>    <strong>H04W 56/00</strong>(2009.01)i; <strong>H04W 72/0446</strong>(2023.01)i; <strong>H04L 5/00</strong>(2006.01)i; <strong>H04W 72/1268</strong>(2023.01)i; <strong>H04L 1/08</strong>(2006.01)i;<br>    <strong>H04W 84/06</strong>(2009.01)i; <strong>H04W 72/231</strong>(2023.01)i; <strong>H04W 84/04</strong>(2009.01)i<br><br>According to International Patent Classification (IPC) or to both national classification and IPC</td></tr>
</table>

**B.    FIELDS SEARCHED**

Minimum documentation searched (classification system followed by classification symbols)

    H04W 56/00(2009.01); H04L 5/00(2006.01); H04W 72/12(2009.01)

Documentation searched other than minimum documentation to the extent that such documents are included in the fields searched

    Korean utility models and applications for utility models: IPC as above
    Japanese utility models and applications for utility models: IPC as above

Electronic data base consulted during the international search (name of data base and, where practicable, search terms used)

    eKOMPASS (KIPO internal) & keywords: DMRS 번들링(bundling), 타이밍 어드밴스 조정(timing advance control), 시간 윈도우(time window), 슬롯(slot)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2023-0028382 A (LG ELECTRONICS INC.) 28 February 2023 (2023-02-28)<br>    See paragraph [0075]. | 1-2,5-6,9-14,17-18 |
| A | | 3-4,7-8,15-16,19-20 |
| Y | WO 2022-235191 A1 (TELEFONAKTIEBOLAGET LM ERICSSON (PUBL)) 10 November 2022 (2022-11-10)<br>    See page 15, lines 16-18 and page 24, lines 22-25; and claim 1. | 1-2,5-6,9-14,17-18 |
| Y | KR 10-2022-0148841 A (LG ELECTRONICS INC.) 07 November 2022 (2022-11-07)<br>    See paragraphs [0004], [0237] and [0240]. | 5-6,12,17-18 |
| A | WO 2023-051450 A1 (VIVO MOBILE COMMUNICATION CO., LTD.) 06 April 2023 (2023-04-06)<br>    See claim 1. | 1-20 |

✓ Further documents are listed in the continuation of Box C.      ✓ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **04 September 2024** | **04 September 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| PCT/KR2024/006503 |

**C.    DOCUMENTS CONSIDERED TO BE RELEVANT**

| Category* | Citation of document, with indication, where appropriate, of the relevant passages | Relevant to claim No. |
|---|---|---|
| A | US 2022-0210806 A1 (OFINNO, LLC) 30 June 2022 (2022-06-30)<br>See paragraphs [0322]-[0329]; and figures 23A-23B. | 1-20 |

Form PCT/ISA/210 (second sheet) (July 2022)

**INTERNATIONAL SEARCH REPORT**
Information on patent family members

International application No.

**PCT/KR2024/006503**

| Patent document cited in search report | | | Publication date (day/month/year) | Patent family member(s) | | | Publication date (day/month/year) |
|---|---|---|---|---|---|---|---|
| KR | 10-2023-0028382 | A | 28 February 2023 | US | 2022-0225363 | A1 | 14 July 2022 |
| | | | | WO | 2022-154581 | A1 | 21 July 2022 |
| WO | 2022-235191 | A1 | 10 November 2022 | EP | 4292345 | A1 | 20 December 2023 |
| | | | | KR | 10-2023-0170085 | A | 18 December 2023 |
| | | | | US | 2024-0188055 | A1 | 06 June 2024 |
| KR | 10-2022-0148841 | A | 07 November 2022 | CN | 115918177 | A | 04 April 2023 |
| | | | | EP | 4132125 | A1 | 08 February 2023 |
| | | | | JP | 2023-529749 | A | 11 July 2023 |
| | | | | JP | 7430283 | B2 | 09 February 2024 |
| | | | | US | 11497006 | B2 | 08 November 2022 |
| | | | | US | 11844084 | B2 | 12 December 2023 |
| | | | | US | 12069670 | B2 | 20 August 2024 |
| | | | | US | 2022-0225322 | A1 | 14 July 2022 |
| | | | | US | 2023-0046073 | A1 | 16 February 2023 |
| | | | | US | 2024-0064745 | A1 | 22 February 2024 |
| | | | | WO | 2022-154583 | A1 | 21 July 2022 |
| WO | 2023-051450 | A1 | 06 April 2023 | CN | 115883041 | A | 31 March 2023 |
| | | | | KR | 10-2024-0071412 | A | 22 May 2024 |
| US | 2022-0210806 | A1 | 30 June 2022 | None | | | |

Form PCT/ISA/210 (patent family annex) (July 2022)